# EUROPEAN PATENT APPLICATION

(11) **EP 4 325 418 A1**
(43) Date of publication of application: **21.02.2024**
(21) Application number: 22787639.8
(22) Date of filing: 15.04.2022
(51) Int. Cl.: G06Q 40/04, G06Q 20/38

(54) **METHOD, TERMINAL AND SYSTEM FOR SPLITTING, VERIFYING AND MANAGING DIGITAL CURRENCY IN TRANSACTION**

(30) Priority: 16.04.2021 CN 202110414589; 16.04.2021 CN 202110414590; 16.04.2021 CN 202110414580
(71) Applicant: Digital Currency Institute, The People's Bank of China, Beijing 100071 (CN)
(72) Inventor: MU, Changchun, Beijing 100071 (CN); DI, Gang, Beijing 100071 (CN); ZHAO, Xinyu, Beijing 100071 (CN); CUI, Peidong, Beijing 100071 (CN); ZOU, Jingdan, Beijing 100071 (CN); ZHANG, Hongxue, Beijing 100071 (CN); BIAN, Yongchao, Beijing 100071 (CN)
(74) Representative: Casalonga
(86) International application number: PCT/CN2022/087116
(87) International publication number: WO 2022/218417

(57) **Abstract**

The present disclosure relates to a method, terminal and system for splitting, verifying and managing a digital currency in a transaction, mainly relating to the technical field of computers. A specific implementation of the method includes: determining a first transaction request indicating a digital currency and first transaction information; generating second transaction information including a second transaction amount according to the first transaction information; respectively signing the first transaction information and the second transaction information by using a private key of a first terminal; generating a first trust chain according to the signed first transaction information and the digital currency, and generating a second trust chain according to the signed second transaction information and the digital currency; and sending the first trust chain to a second terminal, so that the second terminal and the first terminal achieve, according to the first trust chain, an offline transaction corresponding to the first transaction amount included in the first transaction information. The implementation improves the security of the offline transaction while facilitating the use of the digital currency in performing the offline transaction.

## Description

### Cross-Reference to Related Application

The disclosure claims priority to Chinese patent application No. 202110414590.2, filed on April 16, 2021 and entitled "Method, Terminal and System for Splitting Digital Currency in Transaction", Chinese patent application No. 202110414589.X, filed on April 16, 2021 and entitled "Method and Terminal for Verifying Digital Currency in Transaction", and Chinese patent application No. 202110414580.9, filed on April 16, 2021 and entitled "Method, Terminal and Currency Management Apparatus for Managing Offline Duration of Digital Currency ", the disclosures of which are hereby incorporated by reference in their entirety.

### Technical Field

The present disclosure relates to the technical field of computers, and in particular to a method, terminal and system for splitting, verifying and managing a digital currency in a transaction.

### Background

In the era of digital economy, a digital currency is increasingly attracting the attention of banks and consumers worldwide due to its low cost and convenience.

Consumers may not be guaranteed to be online in real time when performing a transaction with the digital currency. For example, when both parties involved in the transaction are in a network-free state, the parties involved in the transaction cannot stay online. In this case, the parties may only perform the offline transaction, and how to ensure the credibility of the digital currency in the offline transaction is crucial to the security of the transaction.

### Summary

In view of this, embodiments of the present disclosure provide a method, terminal and system for splitting, verifying and managing a digital currency in a transaction, which can improve the security of an offline transaction while facilitating the use of the digital currency in performing the offline transaction.

In order to achieve the above objective, according to an aspect of the embodiments of the present disclosure, a method for splitting a digital currency in a transaction is provided.

The method for splitting the digital currency in the transaction of the embodiments of the present disclosure, when applied to a first terminal, includes that: a first transaction request is determined. The first transaction request indicates a digital currency to be transacted and first transaction information, and the first transaction information includes a first transaction amount.

Second transaction information including a second transaction amount is generated according to the first transaction information. The second transaction amount is a difference between an available balance of the digital currency and the first transaction amount.

The first transaction information and the second transaction information are respectively signed by using a private key of the first terminal.

A first trust chain is generated according to the signed first transaction information and the digital currency, and a second trust chain is generated according to the signed second transaction information and the digital currency.

The first trust chain is sent to a second terminal, so that the second terminal and the first terminal achieve, according to the first trust chain, an offline transaction corresponding to the first transaction amount.

As at least one alternative embodiment, the method further includes the following operation.

The second trust chain is sent to a third terminal, so that the third terminal and the first terminal achieve, according to the second trust chain, an offline transaction corresponding to the second transaction amount.

As at least one alternative embodiment, the operation that the first trust chain is generated according to the signed first transaction information and the digital currency includes the following operations.

The first transaction information and a public key of the second terminal are signed by using the private key of the first terminal to generate a first transaction chain.

The first trust chain is generated according to the first transaction chain and the digital currency.

As at least one alternative embodiment, the operation that the second trust chain is generated according to the signed second transaction information and the digital currency includes the following operations.

The second transaction information and a public key of the first terminal are signed by using the private key of the first terminal to generate a second transaction chain.

The second trust chain is generated according to the second transaction chain and the digital currency.

In order to achieve the above objective, according to another aspect of the embodiments of the present disclosure, a method for splitting a digital currency in a transaction is provided.

The method for splitting the digital currency in the transaction of the embodiments of the present disclosure, when applied to a second terminal, includes that: a first trust chain sent by a first terminal is received. The first trust chain includes a digital currency to be transacted and first transaction information signed by using a private key of the first terminal. The first transaction information includes a first transaction amount.

The first transaction information is verified by using a public key of the first terminal.

When the verification of the first transaction information is passed, an offline transaction is performed with the first terminal according to the digital currency and the first transaction amount.

As at least one alternative embodiment, the method further includes the following operations.

A second transaction request is determined. The second transaction request indicates third transaction information and the digital currency, and the third transaction information includes a third transaction amount.

The third transaction information and a public key of a fourth terminal are signed by using a private key of the second terminal to generate a third transaction chain.

The third transaction chain is written into the first trust chain, and the first trust chain into which the third transaction chain is written is sent to the fourth terminal, so that the fourth terminal achieves, according to the first trust chain into which the third transaction chain is written, an offline transaction corresponding to the third transaction amount.

As at least one alternative embodiment, when the verification of the first transaction information is passed and the first trust chain includes a plurality of pieces of transaction information, the method further includes the following operation.

The digital currency is exported according to a transaction amount included in the last of the plurality of pieces of transaction information.

In order to achieve the above objective, according to yet another aspect of the embodiments of the present disclosure, a first terminal for splitting a digital currency in a transaction is provided.

The first terminal for splitting the digital currency in the transaction of the embodiments of the present disclosure includes a first determination module, a splitting module and a first transaction module.

The first determination module is configured to determine a first transaction request. The first transaction request indicates a digital currency to be transacted and first transaction information, and the first transaction information includes a first transaction amount.

The splitting module is configured to generate second transaction information including a second transaction amount according to the first transaction information, the second transaction amount being a difference between an available balance of the digital currency and the first transaction amount; and respectively sign the first transaction information and the second transaction information by using a private key of the first terminal, generate a first trust chain according to the signed first transaction information and the digital currency, and generate a second trust chain according to the signed second transaction information and the digital currency.

The first transaction module is configured to send the first trust chain to a second terminal, so that the second terminal and the first terminal achieve, according to the first trust chain, an offline transaction corresponding to the first transaction amount.

As at least one alternative embodiment, the first transaction module is further configured to send the second trust chain to a third terminal, so that the third terminal and the first terminal achieve, according to the second trust chain, an offline transaction corresponding to the second transaction amount.

As at least one alternative embodiment, the splitting module is configured to sign the first transaction information and a public key of the second terminal by using the private key of the first terminal to generate a first transaction chain; and generate the first trust chain according to the first transaction chain and the digital currency.

As at least one alternative embodiment, the splitting module is configured to sign the second transaction information and a public key of the first terminal by using the private key of the first terminal to generate a second transaction chain; and generate the second trust chain according to the second transaction chain and the digital currency.

In order to achieve the above objective, according to yet another aspect of the embodiments of the present disclosure, a second terminal for splitting a digital currency in a transaction is provided.

The second terminal for splitting the digital currency in the transaction of the embodiments of the present disclosure includes a receiving module, a verification module and a second transaction module.

The receiving module is configured to receive a first trust chain sent by a first terminal. The first trust chain includes a digital currency to be transacted and first transaction information signed by using a private key of the first terminal. The first transaction information includes a first transaction amount.

The verification module is configured to verify the first transaction information by using a public key of the first terminal.

The second transaction module is configured to perform, when the verification of the first transaction information is passed, an offline transaction with the first terminal according to the digital currency and the first transaction amount.

As at least one alternative embodiment, the receiving module is further configured to receive a second transaction request. The second transaction request indicates third transaction information and the digital currency, and the third transaction information includes a third transaction amount.

The second transaction module is further configured to sign the third transaction information and a public key of a fourth terminal by using a private key of the second terminal to generate a third transaction chain; and write the third transaction chain into the first trust chain, and send the first trust chain into which the third transaction chain is written to the fourth terminal, so that the fourth terminal achieves, according to the first trust chain into which the third transaction chain is written, an offline transaction corresponding to the third transaction amount.

As at least one alternative embodiment, the second transaction module is further configured to export, when the verification of the first transaction information is passed and the first trust chain includes a plurality of pieces of transaction information, the digital currency according to a transaction amount included in the last of the plurality of pieces of transaction information.

In order to achieve the above objective, according to yet another aspect of the embodiments of the present disclosure, a system for splitting a digital currency in a transaction is provided.

The system for splitting the digital currency in the transaction of the embodiments of the present disclosure includes at least two terminals.

A trust chain is stored in each of the at least two terminals, and the trust chain includes: the digital currency and one or more pieces of transaction information, the transaction information including a transaction amount. The sum of the transaction amounts included in the last transaction information in each trust chain is equal to a denomination of the digital currency.

In order to achieve the above objective, according to another aspect of the embodiments of the present disclosure, a method for verifying a digital currency in a transaction is provided.

The method for verifying the digital currency in the transaction of the embodiments of the present disclosure, when applied to a first terminal, includes the following operations.

A first transaction request is determined. The first transaction request indicates a digital currency to be transacted and first transaction information.

The first transaction information is signed by using a private key of the first terminal.

A first trust chain is generated according to the signed first transaction information and the digital currency.

The first trust chain is sent to a second terminal, so that the second terminal verifies the first transaction information by using a public key of the first terminal to verify whether the digital currency is credible, thereby causing the first terminal and the second terminal to perform an offline transaction according to the first trust chain.

As at least one alternative embodiment, the operation that the first trust chain is generated according to the signed first transaction information and the digital currency includes the following operations.

The first transaction information and a public key of the second terminal are signed by using the private key of the first terminal to generate a first transaction chain.

The first trust chain is generated according to the first transaction chain and the digital currency.

As at least one alternative embodiment, the operation that the first trust chain is generated according to the signed first transaction information and the digital currency includes the following operations.

The first transaction information is encrypted by using the public key of the second terminal to generate the first transaction chain.

The first trust chain is generated according to the first transaction chain and the digital currency.

As at least one alternative embodiment, the first transaction information includes a transaction amount and at least one of a transaction identifier, the number of transactions and a transaction time.

In order to achieve the above objective, according to yet another aspect of the embodiments of the present disclosure, a method for verifying a digital currency in a transaction is provided.

The method for verifying the digital currency in the transaction of the embodiments of the present disclosure, when applied to a second terminal, includes the following operations.

A first trust chain sent by a first terminal is received. The first trust chain includes a digital currency to be transacted and first transaction information signed by using a private key of the first terminal.

The first transaction information is verified by using a public key of the first terminal.

When the verification is passed, it is determined that the digital currency is credible, so that the second terminal performs an offline transaction with the first terminal according to the first trust chain.

As at least one alternative embodiment, the first trust chain further includes a public key of the second terminal.

The public key of the second terminal is verified by using a private key of the second terminal.

When the verification of the public key of the second terminal and the first transaction information is passed, it is determined that the digital currency is credible.

As at least one alternative embodiment, the method, when applied to the second terminal, further includes the following operations.

A second transaction request is determined. The second transaction request indicates third transaction information, the digital currency and a fourth terminal.

The third transaction information and a public key of the fourth terminal are signed by using the private key of the second terminal to generate a third transaction chain.

The third transaction chain is written into the first trust chain, and the first trust chain into which the third transaction chain is written is sent to the fourth terminal, so that the fourth terminal verifies the third transaction chain according to the public key of the second terminal in the first transaction chain.

As at least one alternative embodiment, the third transaction information and the public key of the fourth terminal are signed by using the private key of the second terminal to generate the third transaction chain.

As at least one alternative embodiment, the maximum transaction amount corresponding to the first transaction information is greater than the maximum transaction amount corresponding to the third transaction information.

As at least one alternative embodiment, when the digital currency is credible and the first trust chain includes a plurality of pieces of transaction information, the method further includes the following operation.

The digital currency is exported according to a transaction amount included in the last of the plurality of pieces of transaction information.

In order to achieve the above objective, according to yet another aspect of the embodiments of the present disclosure, a first terminal for verifying a digital currency in a transaction is provided.

The first terminal for verifying the digital currency in the transaction of the embodiments of the present disclosure includes a first determination module, a first generation module and a first verification module.

The first determination module is configured to determine a first transaction request. The first transaction request indicates a digital currency to be transacted and first transaction information.

The first generation module is configured to sign the first transaction information by using a private key of the first terminal, and generate a first trust chain according to the signed first transaction information and the digital currency.

The first verification module is configured to send the first trust chain to a second terminal, so that the second terminal verifies the first transaction information by using a public key of the first terminal to verify whether the digital currency is credible, thereby causing the first terminal and the second terminal to perform an offline transaction according to the first trust chain.

As at least one alternative embodiment, the first generation module is configured to encrypt the signed first transaction information by using a public key of the second terminal to generate a first transaction chain, and generate the first trust chain according to the first transaction chain and the digital currency.

In order to achieve the above objective, according to yet another aspect of the embodiments of the present disclosure, a second terminal for verifying a digital currency in a transaction is provided.

The second terminal for verifying the digital currency in the transaction of the embodiments of the present disclosure includes a receiving module and a second verification module.

The receiving module is configured to receive a first trust chain sent by a first terminal. The first trust chain includes a digital currency to be transacted and first transaction information signed by using a private key of the first terminal.

The second verification module is configured to verify the first transaction information by using a public key of the first terminal; and determine, when the verification is passed, that the digital currency is credible, so that the second terminal performs an offline transaction with the first terminal according to the first trust chain.

As at least one alternative embodiment, the second terminal further includes a second determination module and a second generation module.

The second determination module is configured to determine a second transaction request. The second transaction request indicates third transaction information and the digital currency.

The second generation module is configured to sign the third transaction information and a public key of a fourth terminal by using a private key of the second terminal to generate a third transaction chain; and write the third transaction chain into the first trust chain, and send the first trust chain into which the third transaction chain is written to the fourth terminal.

As at least one alternative embodiment, the second generation module is configured to sign the third transaction information and the public key of the fourth terminal by using the private key of the second terminal to generate the third transaction chain.

As at least one alternative embodiment, when it is determined that the digital currency is credible and the first trust chain includes a plurality of pieces of transaction information, the second verification module is further configured to export the digital currency according to a transaction amount included in the last of the plurality of pieces of transaction information.

In order to achieve the above objective, according to an aspect of the embodiments of the present disclosure, a method for managing an offline duration of a digital currency is provided.

The method for managing the offline duration of the digital currency of the embodiments of the present disclosure, when applied to a second terminal, includes that: a first trust chain sent by a first terminal is received. The first trust chain indicates a digital currency to be transacted and a transaction time of the digital currency.

A first offline duration of the digital currency is determined according to a first current time and the transaction time, and when the first offline duration is less than a duration threshold, an offline transaction is performed with the first terminal according to the digital currency.

As at least one alternative embodiment, when the first offline duration is not less than the duration threshold, the offline transaction requested by the first terminal is rejected, and a prompt information for updating the transaction time of the digital currency is sent to the first terminal, so that the first terminal updates the transaction time of the digital currency according to the prompt information.

As at least one alternative embodiment, after the offline transaction is performed with the first terminal according to the digital currency, the method further includes the following operation.

The transaction time of the digital currency is updated according to the time of the offline transaction.

As at least one alternative embodiment, when a communication connection is established with a currency management apparatus, the method further includes the following operation.

The digital currency is sent to the currency management apparatus, so that the currency management apparatus updates the transaction time of the digital currency according to a second current time. The digital currency returned by the currency management apparatus is received.

In order to achieve the above objective, according to yet another aspect of the embodiments of the present disclosure, a method for managing an offline duration of a digital currency is provided.

The method for managing the offline duration of the digital currency of the embodiments of the present disclosure, when applied to a currency management apparatus, includes that: a transaction request sent by a second terminal is received. The transaction request indicates a digital currency to be transacted, and an attribute of the digital currency includes a transaction time.

A second offline duration of the digital currency is determined according to a second current time and the transaction time, and when the second offline duration is less than a duration threshold, a transaction is performed according to the digital currency.

As at least one alternative embodiment, the method further includes the following operation.

The transaction time of the digital currency is updated according to the second current time.

As at least one alternative embodiment, the operation that the transaction is performed according to the digital currency includes the following operation.

A payment process requested by the second terminal is achieved according to the digital currency.

Or, the digital currency is redeemed for the second terminal.

As at least one alternative embodiment, the method further includes that: a digital currency generation request sent by a fifth terminal is received. The digital currency generation request indicates a denomination of the requested digital currency and user information corresponding to the fifth terminal.

A digital currency corresponding to the user information and the denomination is generated, and a generation time of the digital currency is written into the digital currency.

The fifth terminal is notified of the digital currency.

In order to achieve the above objective, according to yet another aspect of the embodiments of the present disclosure, a second terminal for managing an offline duration of a digital currency is provided.

The second terminal for managing the offline duration of the digital currency of the embodiments of the present disclosure includes a first receiving module and a first transaction module.

The first receiving module is configured to receive a first trust chain sent by a first terminal. The first trust chain includes a digital currency to be transacted and a transaction time of the digital currency.

The first transaction module is configured to determine a first offline duration of the digital currency according to a first current time and the transaction time, and perform, when the first offline duration is less than a duration threshold, an offline transaction with the first terminal according to the digital currency.

As at least one alternative embodiment, the first transaction module is further configured to reject, when the first offline duration is not less than the duration threshold, the offline transaction requested by the first terminal, and send a prompt information for updating the transaction time of the digital currency to the first terminal, so that the first terminal updates the transaction time of the digital currency according to the prompt information.

As at least one alternative embodiment, the first transaction module is further configured to send the digital currency to a currency management apparatus when establishing a communication connection with the currency management apparatus, so that the currency management apparatus updates the transaction time of the digital currency according to a second current time; and receive the digital currency returned by the currency management apparatus.

In order to achieve the above objective, according to yet another aspect of the embodiments of the present disclosure, a currency management apparatus for managing an offline duration of a digital currency is provided.

The currency management apparatus for managing the offline duration of the digital currency of the embodiments of the present disclosure includes a second receiving module and a second transaction module.

The second receiving module is configured to receive a transaction request sent by a second terminal. The transaction request indicates a digital currency to be transacted, and an attribute of the digital currency includes a transaction time.

The second transaction module is configured to determine a second offline duration of the digital currency according to a second current time and the transaction time, and perform, when the second offline duration is less than a duration threshold, a transaction according to the digital currency.

As at least one alternative embodiment, the second transaction module is further configured to update the transaction time of the digital currency according to the second current time.

As at least one alternative embodiment, the second transaction module is configured to achieve a payment process requested by the second terminal according to the digital currency; or, redeem the digital currency for the second terminal.

As at least one alternative embodiment, the currency management apparatus further includes a currency generation module.

The currency generation module is configured to receive a digital currency generation request sent by a fifth terminal, the digital currency generation request indicating a denomination of the requested digital currency and user information corresponding to the fifth terminal; generate a digital currency corresponding to the user information and the denomination, and write a generation time of the digital currency into the digital currency; and notify the fifth terminal of the digital currency.

In order to achieve the above objective, according to yet another aspect of the embodiments of the present disclosure, an electronic device is provided.

The electronic device of the embodiments of the present disclosure includes: one or more processors and a storage apparatus, configured to store one or more programs. The one or more programs are executed by the one or more processors to cause the one or more processors to implement the method for splitting the digital currency, or the method for verifying the digital currency, or the method for managing the offline duration of the digital currency in the transaction of the embodiments of the present disclosure.

In order to achieve the above objective, according to still another aspect of the embodiments of the present disclosure, a computer-readable storage medium is provided.

A computer program is stored on a computer-readable storage medium of the embodiments of the present disclosure. The computer-program is executed by a processor to implement the method for splitting the digital currency, or the method for verifying the digital currency, or the method for managing the offline duration of the digital currency in the transaction of the embodiments of the present disclosure.

One embodiment of the above disclosure has the following advantages or beneficial effects: when determining the first transaction request, the first terminal (payer) generates the second transaction information including the second transaction amount according to the first transaction information indicated by the first transaction request, wherein the second transaction amount is the difference between the available balance of the digital currency indicated by the first transaction request and the first transaction amount. The first transaction information and the second transaction information indicated by the first indication request are respectively signed by using the private key of the first terminal, and then the first trust chain and the second trust chain are respectively generated according to the signed first transaction information and second transaction information and the digital currency, so that the digital currency is split in the offline transaction, which facilitates the offline transaction. Further, the first terminal sends the first trust chain to the second terminal (payee), so that the second terminal may verify the first transaction information in the first trust chain by using the public key of the first terminal to verify whether the digital currency is credible. When the digital currency is credible, the second terminal performs the offline transaction corresponding to the first transaction amount with the first terminal. Therefore, through the secure and effective verification of the digital currency in the transaction, the second terminal and the first terminal perform the offline transaction according to the first trust chain in the offline situation, so as to ensure the security of the offline transaction.

In addition, when determining the first transaction request, the first terminal (payer) signs the first transaction information indicated by the first transaction request by using the own private key, generates the first trust chain according to the signed first transaction information and the digital currency to be transacted indicated by the first transaction request, and sends the first trust chain to the second terminal (payee), so that the second terminal verifies the first transaction information in the first trust chain by using the public key of the first terminal to verify whether the digital currency is credible. When the digital currency is credible, the second terminal performs the offline transaction with the first terminal. Therefore, through the secure and effective verification of the digital currency in the transaction, the second terminal and the first terminal perform the offline transaction according to the first trust chain in the offline situation, so as to ensure the security of the offline transaction.

In addition, when receiving the first trust chain sent by the first terminal, the second terminal determines the first offline duration of the digital currency according to the first current time and the transaction time of the digital currency to be transacted indicated by the first trust chain. The first offline duration is the duration between the first current time and the last transaction time of the digital currency. Only when the determined first offline duration is less than the duration threshold, the second terminal performs the offline transaction with the first terminal according to the digital currency. Therefore, the security of the offline transaction is ensured by controlling the offline duration of the digital currency in the transaction.

Further effects of the above non-conventional alternatives are described below with reference to the specific implementations.

### Brief Description of the Drawings

The drawings are used for a better understanding of the present disclosure, and do not constitute improper limitations to the present disclosure. Herein:
Fig. 1 is a schematic diagram of main steps of a method for splitting a digital currency in a transaction according to an embodiment of the present disclosure.
Fig. 2 is a schematic structural diagram of a transaction chain according to an embodiment of the present disclosure.
Fig. 3 is a schematic structural diagram of another transaction chain according to an embodiment of the present disclosure.
Fig. 4 is a schematic structural diagram of yet another transaction chain according to an embodiment of the present disclosure.
Fig. 5 is a schematic structural diagram of a first trust chain according to an embodiment of the present disclosure.
Fig. 6 is a schematic diagram of main steps of another method for verifying a digital currency in a transaction when applied to a first terminal according to an embodiment of the present disclosure.
Fig. 7 is a schematic diagram of main steps of a method for verifying a digital currency in a transaction when applied to a second terminal according to an embodiment of the present disclosure.
Fig. 8 is a schematic diagram of main steps of another method for verifying a digital currency in a transaction when applied to a second terminal according to an embodiment of the present disclosure.
Fig. 9 is a schematic structural diagram of another first trust chain according to an embodiment of the present disclosure.
Fig. 10 is a schematic diagram of main modules of a first terminal for splitting a digital currency in a transaction according to an embodiment of the present disclosure.
Fig. 11 is a schematic diagram of main modules of a second terminal for splitting a digital currency in a transaction according to an embodiment of the present disclosure.
Fig. 12 is a schematic diagram of main steps of a method for verifying a digital currency in a transaction when applied to a first terminal according to an embodiment of the present disclosure.
Fig. 13 is a schematic diagram of main steps of a method for verifying a digital currency in a transaction when applied to a second terminal according to an embodiment of the present disclosure.
Fig. 14 is a schematic diagram of main steps of another method for verifying a digital currency in a transaction when applied to a second terminal according to an embodiment of the present disclosure.
Fig. 15 is a schematic diagram of main steps of a method for verifying a digital currency in a transaction according to an embodiment of the present disclosure.
Fig. 16 is a schematic diagram of main modules of a first terminal for verifying a digital currency in a transaction according to an embodiment of the present disclosure.
Fig. 17 is a schematic diagram of main modules of a second terminal for verifying a digital currency in a transaction according to an embodiment of the present disclosure.
Fig. 18 is a schematic diagram of main steps of a method for managing an offline duration of a digital currency when applied to a second terminal according to an embodiment of the present disclosure.
Fig. 19 is a schematic diagram of main steps of another method for managing an offline duration of a digital currency when applied to a second terminal according to an embodiment of the present disclosure.
Fig. 20 is a schematic diagram of main steps of a method for managing an offline duration of a digital currency when applied to a currency management apparatus according to an embodiment of the present disclosure.
Fig. 21 is a schematic diagram of main steps of another method for managing an offline duration of a digital currency according to an embodiment of the present disclosure.
Fig. 22 is a schematic diagram of main modules of a second terminal for managing an offline duration of a digital currency according to an embodiment of the present disclosure.
Fig. 23 is a schematic diagram of main modules of a currency management apparatus for managing an offline duration of a digital currency according to an embodiment of the present disclosure.
Fig. 24 is a diagram of an exemplary system architecture in which an embodiment of the present disclosure may be applied.
Fig. 25 is a schematic structural diagram of a computer system suitable for implementing a terminal device or a server according to an embodiment of the present disclosure.

### Detailed Description of the Embodiments

Exemplary embodiments of the present disclosure are described in detail below with reference to the drawings, including various details of the embodiments of the present disclosure to facilitate understanding, and should be regarded as merely exemplary. Thus, those of ordinary skilled in the art shall understand that, variations and modifications may be made on the embodiments described herein, without departing from the scope and spirit of the present disclosure. Likewise, for clarity and conciseness, descriptions of well-known functions and structures are omitted in the following description.

It is to be noted that the embodiments of the present disclosure and features in the embodiments may be combined with each other without conflict.

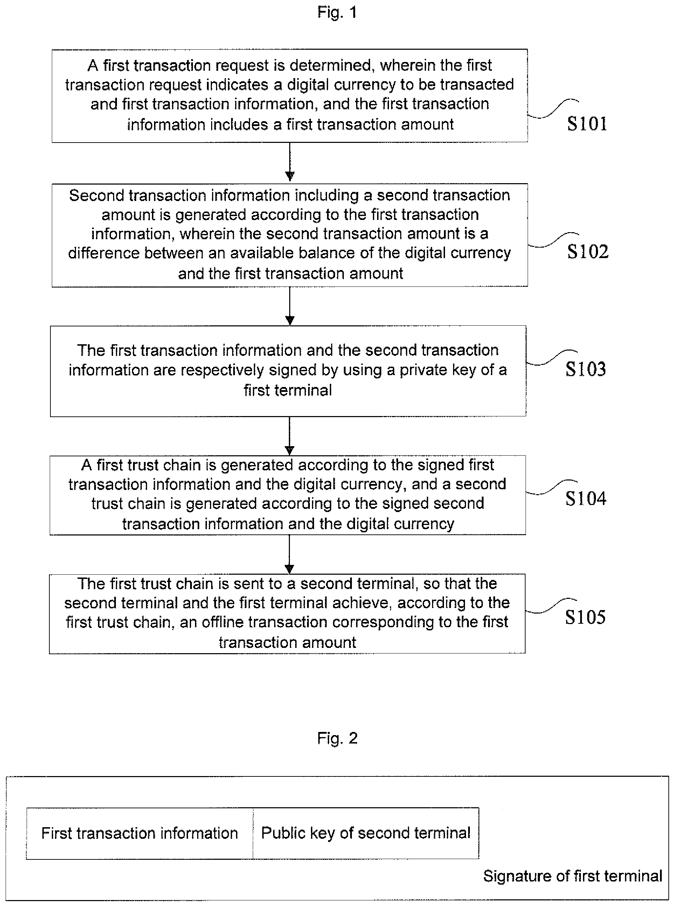

Fig. 1 is a schematic diagram of main steps of a method for splitting a digital currency in a transaction when applied to a first terminal according to an embodiment of the present disclosure.

As shown in Fig. 1, the method for splitting the digital currency in the transaction of the embodiments of the present disclosure, when applied to the first terminal, mainly includes the following steps.

At S101, a first transaction request is determined. The first transaction request indicates a digital currency to be transacted and first transaction information, and the first transaction information includes a first transaction amount.

The first transaction request is automatically generated when a first user (payer) performs the transaction. For example, when the first user wants to transfer money to a second user (payee) by using the digital currency, the first transaction request corresponding to a transfer transaction is generated.

This first transaction request indicates not only the digital currency to be transacted, but also the first transaction information. The first transaction information includes not only the first transaction amount, but also at least one of a transaction identifier, the number of transactions and a transaction time. For example, when the first transaction request corresponds to the transfer transaction, the first transaction amount is an amount to be transferred, the transaction identifier may be an order number of this transfer, the transaction time may be the time when the first transaction information is generated, that is, the time when a transfer request is submitted, and the number of transactions may be the number of transactions have been performed by the digital currency to be transacted.

At S102, second transaction information including a second transaction amount is generated according to the first transaction information. The second transaction amount is a difference between an available balance of the digital currency and the first transaction amount.

It is understandable that the available balance of the digital currency is a difference between an initial denomination of the digital currency and the transaction amount. For example, the initial denomination of the digital currency exported by the first terminal from a currency management apparatus is 100, before this transaction, the digital currency has been transacted twice, and the transaction amount is 10 each time, so that the available balance of the digital currency is 80. The second transaction amount is the difference between the available balance of the digital currency and the first transaction amount. If the first transaction amount is 20, the second transaction amount is 60. It is understandable that the first transaction amount needs to be not greater than the available balance of the digital currency. If the first terminal verifies that the first transaction amount is greater than the available balance of the digital currency, it may directly reject this transaction.

At S103, the first transaction information and the second transaction information are respectively signed by using a private key of the first terminal.

At S104, a first trust chain is generated according to the signed first transaction information and the digital currency, and a second trust chain is generated according to the signed second transaction information and the digital currency.

It is understandable that the first transaction chain and the second trust chain have the same generation operation, but different components of the trust chain. That is, the first transaction chain mainly consists of the first transaction information and the digital currency, while the second transaction chain mainly consists of the second transaction information and the digital currency. However, the composition actions of both are consistent. Furthermore, the signed transaction information included in the trust chain mentioned herein, in addition to the transaction amount, may further include the transaction time.

For ease of description, taking a generation process of the first trust chain as an example, the generation operation of the trust chain is described in detail below. When the first trust chain is generated, the private key of the first terminal is used to sign, then the first transaction chain is generated according to a signature of the first terminal and the first transaction information, and then the first transaction chain and the digital currency are combined to generate the first trust chain.

As at least one alternative embodiment, when the first transaction chain is generated, the first transaction information and a public key of the second terminal are signed by using the private key of the first terminal to generate the first transaction chain, and then the first trust chain is generated according to the first transaction chain and the digital currency.

It is understandable that a user of the first terminal is the payer, and a user of the second terminal is the payee. The public key of the second terminal may indicate the information of the payee, and the first transaction information and the public key of the second terminal are signed by using the private key of the first terminal to generate the first transaction chain. The generated first transaction chain is as shown in Fig. 2, so that the first transaction chain indicates not only the information of the payer, but also the information of the payee. That is, the first transaction chain represents the transaction corresponding to the first transaction request between the first terminal and the second terminal.

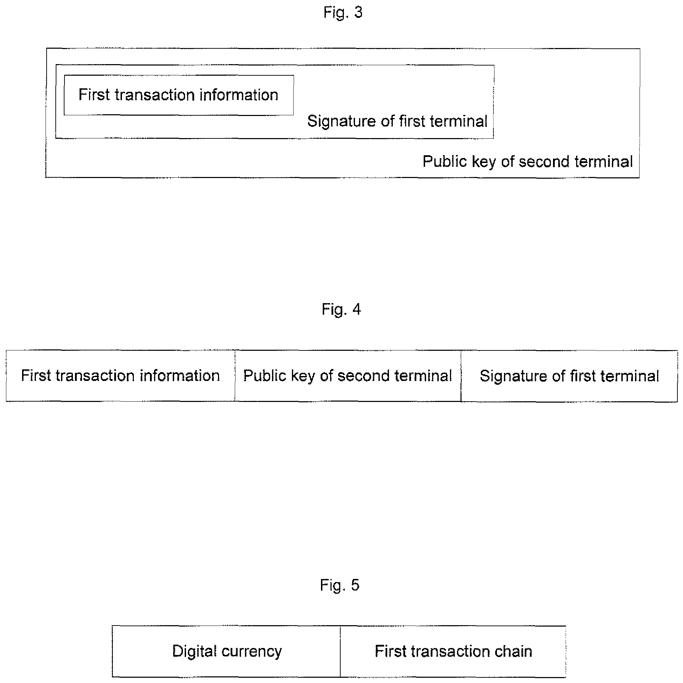

In addition, the first transaction information signed by using the private key of the first terminal is also encrypted by using the public key of the second terminal (payee) to generate the first transaction chain. A schematic diagram of the first transaction chain generated in this manner is as shown in Fig. 3. Therefore, the first transaction chain indicates not only the information of the payer, but also the information of the payee. That is, the first transaction chain generated in this manner also represents the transaction corresponding to the first transaction request between the first terminal and the second terminal.

It is understandable that the above two manners of generating the first transaction chain only differ in signature methods. In other words, as shown in Fig. 4, the transaction chains generated by different signature methods all include the private key of the first terminal, the public key of the second terminal and the first transaction information. Accordingly, the second terminal has different verification methods for the first transaction chain and the second transaction chain, but both of which represent the transaction corresponding to the first transaction request between the first terminal and the second terminal. In addition, as mentioned above, the generation process of the second transaction chain is the same as the generation process of the first transaction chain, only changing the first transaction information in the first transaction chain into the second transaction information. The generation process of the second transaction chain will not be elaborated herein.

After the first transaction chain is generated, the first transaction chain and the digital currency are combined to generate the first trust chain for the offline transaction between the first terminal and the second terminal. The generated first trust chain is as shown in Fig. 5. In addition, the second transaction chain and the digital currency are combined in the same manner to generate the second trust chain.

At S105, the first trust chain is sent to the second terminal, so that the second terminal and the first terminal, according to the first trust chain, achieve an offline transaction corresponding to the first transaction amount.

After the first terminal sends the first trust chain to the second terminal, the second terminal verifies the first transaction information by using the public key of the first terminal. When the verification is passed, it indicates that the second terminal successfully authenticates the signature of the first terminal, and the first transaction chain in the first trust chain is credible, thereby verifying that the digital currency in the first trust chain is credible. Therefore, the offline transaction corresponding to the first transaction amount between the second terminal and the first terminal is achieved according to the first trust chain.

The verification process of the second terminal for the first transaction information varies depending on the generation method of the first transaction chain. When the transaction chain in the first trust chain is the first transaction chain obtained by encrypting the signed first transaction information through the public key of the second terminal, the second terminal first decrypts the first transaction chain by using the private key of the second terminal to obtain the first transaction information signed by the private key of the first terminal, and then further verifies the first transaction information by using the public key of the first terminal to obtain the first transaction information. Through this process, it can be seen that, in order to verify whether the first transaction information is credible, the second terminal needs to decrypt the public key of the second terminal by using the private key of the second terminal and verify the signature of the private key of the first terminal in sequence by using the public key of the first terminal. In other words, when the public key of the second terminal and the private key of the first terminal are verified successfully, it is determined that the verification of the first transaction information is passed, thereby determining that the digital currency is credible.

In addition, the second terminal further verifies each signature in the digital currency. For example, when signatures of the issuing institution, the central management institution of the issuing institution and/or the owner of the digital currency are recorded in the digital currency, the second terminal verifies the signatures of the issuing institution, the central management institution of the issuing institution and the owner respectively, so as to further ensure the credibility of the digital currency, thereby further improving the security of the offline transaction.

In addition, for the second trust chain, the first terminal directly stores the second trust chain, that is, the first terminal retains the second trust chain. At this time, the first terminal signs the second transaction information and the public key of the first terminal by using the private key of the first terminal to generate the second transaction chain, and generates the second trust chain according to the second transaction chain and the digital currency.

Of course, the first terminal also performs a new transaction with other terminals (third terminal) according to the second trust chain, that is, the first terminal may send the second trust chain to the third terminal, so that the third terminal and the first terminal achieve, according to the second trust chain, an offline transaction corresponding to the second transaction amount.

As mentioned above, the generation process of the second trust chain is the same as the generation process of the first trust chain, only changing the first transaction information in the first trust chain into the second transaction information. That is, the second trust chain is generated by the same method as the generation method of the first trust chain. Accordingly, the process of the third terminal performing the transaction with the first terminal according to the second trust chain is the same as the process of the second terminal performing the transaction with the first terminal according to the first trust chain.

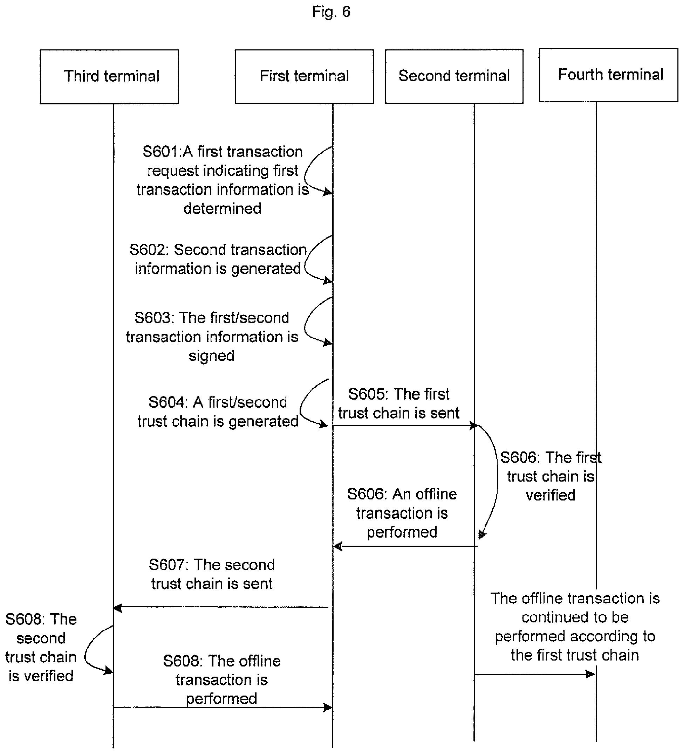

According to the above embodiment, as shown in Fig. 6, a method for splitting a digital currency in a transaction provided by the present disclosure, when applied to a first terminal, may include the following steps.

At S601, a first transaction request is determined. The first transaction request indicates a digital currency to be transacted and first transaction information, and the first transaction information includes a first transaction amount.

At S602, second transaction information including a second transaction amount is generated according to the first transaction information. The second transaction amount is a difference between an available balance of the digital currency and the first transaction amount.

At S603, the first transaction information and the second transaction information are respectively signed by using a private key of the first terminal.

At S604, a first trust chain is generated according to the signed first transaction information and the digital currency, and a second trust chain is generated according to the signed second transaction information and the digital currency.

At S605, the first trust chain is sent to a second terminal.

At S606, the second terminal verifies the first trust chain, and achieves, when the verification is passed, an offline transaction corresponding to the first transaction amount according to the first trust chain.

It is worth mentioning that, after the second terminal performs the transaction with the first terminal according to the first trust chain, the second terminal continues to perform the transaction with a fourth terminal according to the first trust chain. For example, the second terminal generates a third transaction chain according to the transaction information between the second terminal and the fourth terminal, then writes the third transaction chain into the first trust chain, and then sends the first trust chain into which the third transaction chain is written to the fourth terminal. After verifying the first trust chain, the fourth terminal performs the transaction with the second terminal according to the first trust chain.

At S607, the second trust chain is sent to a third terminal.

At S608, the third terminal verifies the second trust chain, and achieves, when the verification is passed, an offline transaction corresponding to the second transaction amount according to the second trust chain.

According to the method for splitting the digital currency in the transaction of the embodiments of the present disclosure, when determining the first transaction request, the first terminal (payer) generates the second transaction information including the second transaction amount according to the first transaction information indicated by the first transaction request, wherein the second transaction amount is the difference between the available balance of the digital currency indicated by the first transaction request and the first transaction amount, respectively signs, by using the private key of the first terminal, the first transaction information and the second transaction information indicated by the first indication request, and then respectively generates the first trust chain and the second trust chain according to the signed first transaction information, second transaction information and the digital currency, so that the digital currency is split in the offline transaction, which facilitates the offline transaction. Further, the first terminal sends the first trust chain to the second terminal (payee), so that the second terminal verifies the first transaction information in the first trust chain by using the public key of the first terminal to verify whether the digital currency is credible. When the digital currency is credible, the second terminal may perform the offline transaction corresponding to the first transaction amount with the first terminal. Therefore, through the secure and effective verification of the digital currency in the transaction, the second terminal and the first terminal perform the offline transaction according to the first trust chain in the offline situation, so as to ensure the security of the offline transaction.

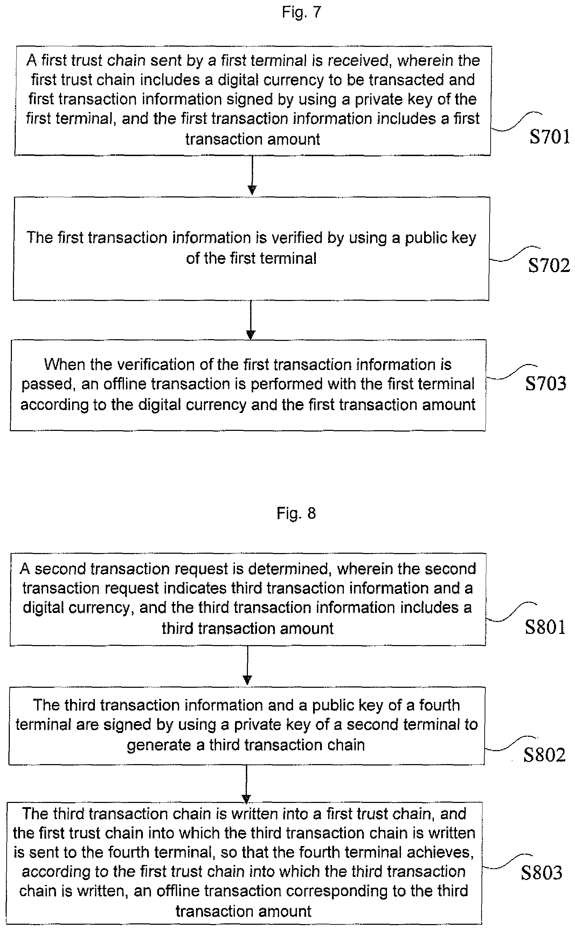

Fig. 7 is a schematic diagram of main steps of a method for splitting a digital currency in a transaction according to an embodiment of the present disclosure.

As shown in Fig. 7, the method for splitting the digital currency in the transaction of the embodiments of the present disclosure, when applied to a second terminal, mainly includes the following steps.

At S701, a first trust chain sent by a first terminal is received. The first trust chain includes a digital currency to be transacted and first transaction information signed by using a private key of the first terminal. The first transaction information includes a first transaction amount.

At S702, the first transaction information is verified by using a public key of the first terminal.

At S703, when the verification of the first transaction information is passed, an offline transaction is performed with the first terminal according to the digital currency and the first transaction amount.

After the first terminal sends the first trust chain to the second terminal, the second terminal verifies the first transaction information by using the public key of the first terminal. When the verification is passed, it indicates that the second terminal successfully authenticates the signature of the first terminal, and a first transaction chain in the first trust chain is credible, thereby verifying that the digital currency in the first trust chain is credible. Therefore, the offline transaction between the second terminal and the first terminal is achieved according to the first trust chain.

The verification process of the second terminal for the first transaction information varies depending on the generation method of the first transaction chain. When the transaction chain in the first trust chain is the first transaction chain obtained by encrypting the signed first transaction information through a public key of the second terminal, the second terminal first may decrypt the first transaction chain by using a private key of the second terminal to obtain the first transaction information signed by the private key of the first terminal, and then verifies the signed first transaction information by using the public key of the first terminal to obtain the first transaction information.

The same digital currency may be transacted multiple times according to a denomination thereof and a transaction amount indicated by each transaction. For example, when the denomination of the digital currency is greater than the transaction amount of the one-time transaction, the digital currency has an available balance after the completion of the one-time transaction. The available balance is a difference between an initial denomination of the digital currency and the transaction amount of the one-time transaction, and the digital currency is used for performing the transaction again according to the available balance of the digital currency.

In the embodiments of the present disclosure, after performing the offline transaction with the first terminal according to the first trust chain sent by the first terminal, the second terminal continues to perform the transaction with other terminals (such as a fourth terminal) again according to the first trust chain, so that the plurality of terminals may perform the transaction multiple times according to the first trust chain. For ease of description, the offline transaction between the second terminal and the first terminal is referred to as a primary transaction, and the offline transaction between the second terminal and the fourth terminal is referred to as a secondary transaction below. The fourth terminal may be the same as or different from the first terminal. When the fourth terminal is the same as the first terminal, it indicates that the payee and the payer are exchanged in the secondary transaction. That is, the first terminal is the payer, and the second terminal is the payee in the primary transaction; and the second terminal is the payer, and the first terminal is the payee in the secondary transaction.

In one embodiment of the present disclosure, as shown in Fig. 8, a process of a second terminal performing a secondary transaction according to a first trust chain may include the following steps.

At S801, a second transaction request is determined. The second transaction request indicates third transaction information and a digital currency, and the third transaction information includes a third transaction amount.

The second transaction request is automatically generated when a user of the second terminal (a payer of the secondary transaction) performs the transaction, and the digital currency indicated by the second transaction request is the digital currency in the first trust chain, indicating that the first trust chain is used for this transaction.

At S802, the third transaction information and a public key of a fourth terminal are signed by using a private key of the second terminal to generate a third transaction chain.

It is understandable that the generation process of the third transaction chain is the same as the generation process of the first transaction chain or the second transaction chain. That is, the third transaction information and a public key of a third terminal are signed by using the private key of the second terminal to generate the third transaction chain. For example, the third transaction information and the public key of the third terminal are signed by using the private key of the second terminal to generate the third transaction chain. Or, the third transaction information is signed by the private key of the second terminal, and then the third transaction information signed by the private key of the second terminal is encrypted by using the public key of the third terminal to generate the third transaction chain.

At S803, the third transaction chain is written into the first trust chain, and the first trust chain into which the third transaction chain is written is sent to the fourth terminal, so that the fourth terminal achieves, according to the first trust chain into which the third transaction chain is written, an offline transaction corresponding to the third transaction amount.

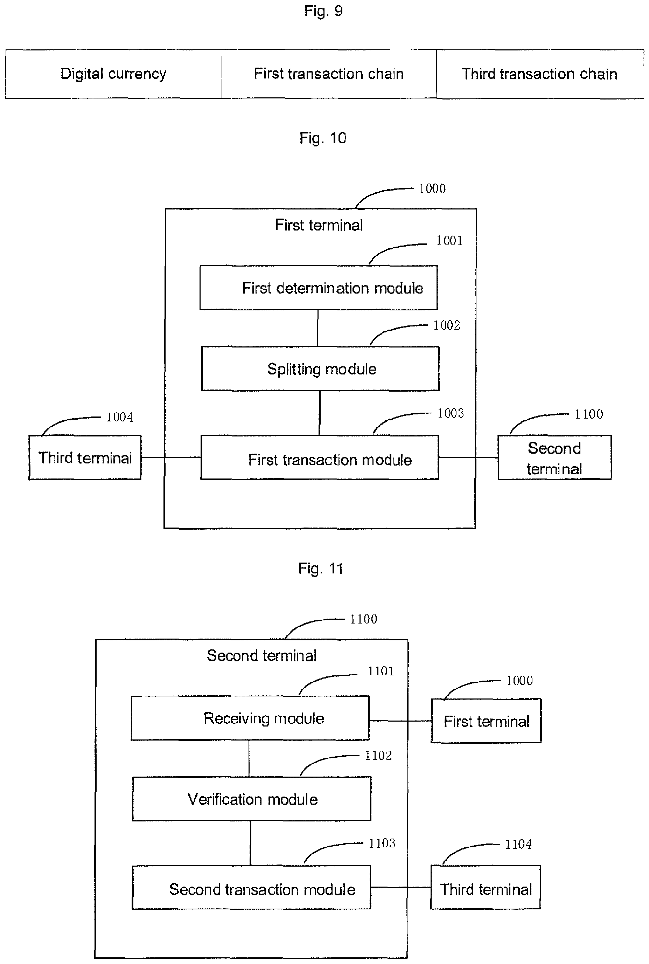

After the third transaction chain is generated, the third transaction chain is written into the first trust chain to form a new first trust chain, and the structure of the new first trust chain structure is as shown in Fig. 9. Because the third transaction chain represents the transaction corresponding to the second transaction request between the second terminal and the fourth terminal, the fourth terminal verifies the third transaction information and digital currency according to the new first trust chain, and achieves, when the verification of the digital currency is passed, the offline transaction between the fourth terminal and the second terminal according to the new first trust chain. The verification process of the new first trust chain is the same as the above verification process of the second terminal for the first trust chain, which will not be elaborated herein.

When receiving the trust chain, a receiving terminal (payee) of the trust chain further performs verification according to the available balance of the digital currency and the transaction amount corresponding to the transaction information, and performs, when the available balance of the digital currency is not less than the transaction amount corresponding to the transaction information, the offline transaction with a sending terminal (payer) of the trust chain according to the digital currency, so as to further improve the security of the offline transaction.

According to the above embodiment, as shown in Fig. 9, the trust chain may include a plurality of transaction chains corresponding to a plurality of pieces of transaction information respectively. The plurality of pieces of transaction information may be the above first transaction information and the third transaction information, and the corresponding transaction chains are the first transaction chain and the third transaction chain respectively. The plurality of transaction chains represent that the digital currency in the trust chain is transacted multiple times, and the objects of the transactions are different.

According to the above generation process of the trust chain, it is understandable that only the transaction corresponding to the last transaction information in the trust chain is the transaction corresponding to the receiving terminal of the trust chain. For example, when the trust chain includes the first transaction chain and the third transaction chain, the transaction corresponding to the first transaction chain (primary transaction) is the offline transaction between the first terminal and the second terminal, the transaction corresponding to the third transaction chain (secondary transaction) is the offline transaction between the second terminal and the fourth terminal, and only the transaction corresponding to the third transaction chain generated last is the transaction corresponding to the receiving terminal (fourth terminal) of the trust chain, so that when the fourth terminal redeems the digital currency, the digital currency is exported only according to the transaction amount corresponding to the related transaction (secondary transaction). For another example, when the first trust chain received by the second terminal includes the plurality of pieces of transaction information, and the first transaction information is the last transaction information, the digital currency in the first trust chain is exported according to the first transaction amount included in the last transaction information in the first trust chain.

It is worth mentioning that each transaction chain in the trust chain may include a timestamp. The last transaction information in the trust chain may be determined according to the timestamps of the plurality of transaction chains. That is, the transaction information corresponding to the transaction chain closest to the current time is the last transaction information in the trust chain.

It is understandable that, when the fourth transaction amount between the first terminal and the third terminal is less than the available balance of the digital currency in the second trust chain, after the third terminal performs the offline transaction with the first terminal according to the second trust chain, the third terminal also performs the offline transaction with other terminals again according to the second trust chain. The process is the same as the process of the offline transaction between the second terminal and the fourth terminal, which will not be elaborated herein. At the same time, when the transaction amount between the first terminal and the third terminal is less than the available balance of the digital currency in the second trust chain, the first terminal additionally generates a fourth trust chain, and the available balance of the digital currency in the fourth trust chain is the difference between the available balance of the digital currency in the second trust chain and the fourth transaction amount. Therefore, the secure and effective offline transactions between the plurality of terminals are achieved according to the trust chain.

In the process of the plurality of terminals performing the offline transactions according to the trust chain, each terminal has the trust chain corresponding to the transaction of the terminal. Each trust chain includes the digital currency and one or more transaction information, and the transaction information includes the corresponding transaction amount. It is understandable that the transaction amount included in each piece of transaction information corresponds to the corresponding transaction thereof. In the process of transmitting the trust chain in the plurality of terminals, the transaction amount included in the transaction information of each trust chain is the difference between the available balance of the digital currency and the corresponding transaction amount thereof, and each trust chain corresponds to the same digital currency. At the same time, according to the above generation process of the trust chain, only the transaction corresponding to the last transaction information in the trust chain is the transaction corresponding to the receiving terminal of the trust chain. That is, the transaction corresponding to the last transaction information in the trust chain is the transaction corresponding to the terminal where the trust chain is located. Therefore, the sum of the transaction amounts included in the last transaction information of the trust chains stored in the terminals respectively is equal to a denomination of the digital currency corresponding to each trust chain. The denomination of the digital currency is an initial denomination of the digital currency when the digital currency is exported from a currency management apparatus, that is, a denomination when the digital currency is not transacted.

For example, the digital currency is exported from the currency management apparatus by the first terminal, and the denomination of the digital currency is 100 when exported. When the first terminal and the second terminal perform a transaction with the transaction amount of 10 through the first trust chain, the second terminal continues to perform a transaction with the transaction amount of 5 with the fourth terminal through the first trust chain. At the same time, after the first terminal and the third terminal perform a secondary transaction with the transaction amount of 20 through the second trust chain, the available balances of the digital currencies indicated by the trust chains stored by the fourth terminal and the second terminal are 5, the available balance of the digital currency indicated by the remaining third trust chain of the first terminal is 70, and the available balance of the digital currency indicated by the second trust chain stored by the third terminal is 20. Therefore, the sum of the transaction amounts included in the last transactions of the terminals is equal to the denomination of the digital currency. In this embodiment, the sum of the transaction amounts included in the last transactions of the trust chains stored by the first terminal, the second terminal, the third terminal and the fourth terminal is 100.

According to the above embodiment, the present disclosure further provides a system for splitting a digital currency in a transaction, which includes at least two terminals. A trust chain is stored in each of the at least two terminals, and the trust chain includes the digital currency and one or more pieces of transaction information. The transaction information includes a transaction amount. The sum of the transaction amounts included in the last transaction information in the trust chains is equal to a denomination of the digital currency.

Fig. 10 is a schematic diagram of main modules of a first terminal for splitting a digital currency in a transaction according to an embodiment of the present disclosure.

As shown in Fig. 10, the first terminal 1000 for splitting the digital currency in the transaction of the embodiments of the present disclosure includes a first determination module 1001, a splitting module 1002 and a first transaction module 1003.

The first terminal 1001 is configured to determine a first transaction request. The first transaction request indicates a digital currency to be transacted and first transaction information, and the first transaction information includes a first transaction amount.

The splitting module 1002 is configured to generate second transaction information including a second transaction amount according to the first transaction information, the second transaction amount being a difference between an available balance of the digital currency and the first transaction amount; and respectively sign the first transaction information and the second transaction information by using a private key of a first terminal, generate a first trust chain according to the signed first transaction information and the digital currency, and generate a second trust chain according to the signed second transaction information and the digital currency.

The first transaction module 1003 is configured to send the first trust chain to a second terminal 1100, so that the second terminal 1100 and the first terminal 1000 achieve, according to the first trust chain, an offline transaction corresponding to the first transaction amount.

In one embodiment of the present disclosure, the first transaction module 1003 is further configured to send the second trust chain to a third terminal 1004, so that the third terminal and the first terminal achieve, according to the second trust chain, an offline transaction corresponding to the second transaction amount.

In one embodiment of the present disclosure, the splitting module 1002 is configured to sign the first transaction information and a public key of the second terminal by using the private key of the first terminal to generate a first transaction chain; and generate the first trust chain according to the first transaction chain and the digital currency.

In one embodiment of the present disclosure, the splitting module 1002 is configured to sign the second transaction information and a public key of the first terminal by using the private key of the first terminal to generate a second transaction chain; and generate the second trust chain according to the second transaction chain and the digital currency.

Fig. 11 is a schematic diagram of main modules of a second terminal for splitting a digital currency in a transaction according to an embodiment of the present disclosure.

As shown in Fig. 11, the second terminal 1100 for splitting the digital currency in the transaction of the embodiments of the present disclosure includes a receiving module 1101, a verification module 1102 and a second transaction module 1103.

The receiving module 1101 is configured to receive a first trust chain sent by a first terminal 1000. The first trust chain includes a digital currency to be transacted and first transaction information signed by using a private key of the first terminal. The first transaction information includes a first transaction amount.

The verification module 1102 is configured to verify the first transaction information by using a public key of the first terminal.

The second transaction module 1103 is configured to perform, when the verification of the first transaction information is passed, an offline transaction with the first terminal 1000 according to the digital currency and the first transaction amount.

In one embodiment of the present disclosure, the receiving module 1101 is further configured to receive a second transaction request. The second transaction request indicates third transaction information and the digital currency, and the third transaction information includes a third transaction amount.

The second transaction module 1103 is further configured to sign the third transaction information and a public key of a fourth terminal by using a private key of the second terminal to generate a third transaction chain; and write the third transaction chain into the first trust chain, and send the first trust chain into which the third transaction chain is written to the fourth terminal 1104, so that the fourth terminal 1104 achieves, according to the first trust chain into which the third transaction chain is written, an offline transaction corresponding to the third transaction amount.

In one embodiment of the present disclosure, the second transaction module 1103 is further configured to export, when the verification of the first transaction information is passed and the first trust chain includes a plurality of pieces of transaction information, the digital currency according to a transaction amount included in the last of the plurality of pieces of transaction information.

According to the first terminal and the second terminal for splitting the digital currency in the transaction of the embodiments of the present disclosure, when determining the first transaction request, the first terminal (payer) generates the second transaction information including the second transaction amount according to the first transaction information indicated by the first transaction request, wherein the second transaction amount is the difference between the available balance of the digital currency indicated by the first transaction request and the first transaction amount. The first transaction information indicated by the first indication request and the second transaction information are respectively signed by using the private key of the first terminal. And then the first trust chain and the second trust chain are respectively generated according to the signed first transaction information and second transaction information and the digital currency, so that the digital currency is split in the offline transaction, which facilitates the offline transaction. Further, the first terminal sends the first trust chain to the second terminal (payee), so that the second terminal verifies the first transaction information in the first trust chain by using the public key of the first terminal to verify whether the digital currency is credible. When the digital currency is credible, the second terminal performs the offline transaction corresponding to the first transaction amount with the first terminal. Therefore, through the secure and effective verification of the digital currency in the transaction, the second terminal and the first terminal perform the offline transaction according to the first trust chain in the offline situation, so as to ensure the security of the offline transaction.

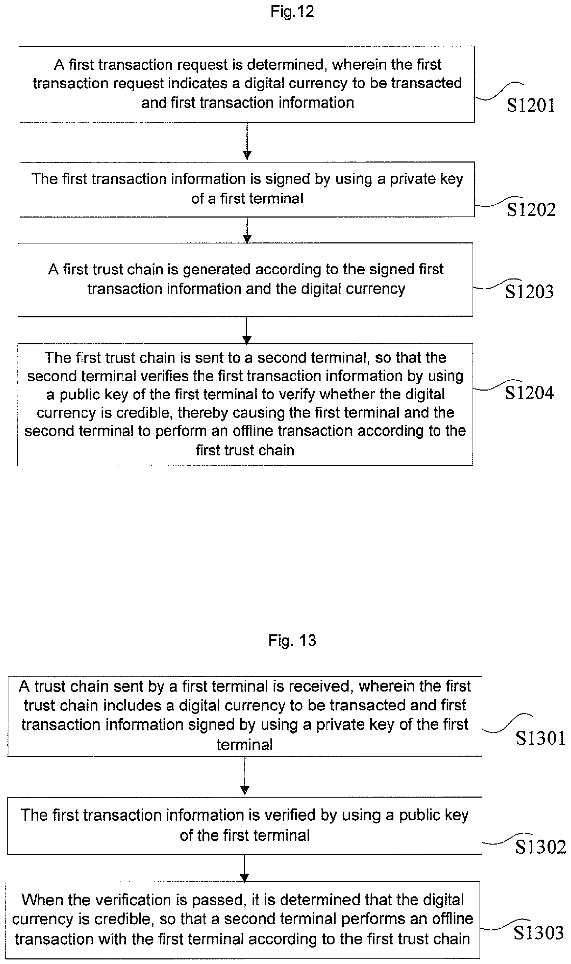

Fig. 12 is a schematic diagram of main steps of a method for verifying a digital currency in a transaction according to an embodiment of the present disclosure.

As shown in Fig. 12, the method for verifying the digital currency in the transaction of the embodiments of the present disclosure, when applied to a first terminal, mainly includes the following steps.

At S1201, a first transaction request is determined. The first transaction request indicates a digital currency to be transacted and first transaction information.

The first transaction request is automatically generated when a first user (payer) performs the transaction. For example, when the first user wants to transfer money to a second user (payee) by using the digital currency, the first transaction request corresponding to a transfer transaction is generated.

The first transaction request indicates not only the digital currency to be transacted, but also the first transaction information. The first transaction information includes not only a transaction amount, but also at least one of a transaction identifier, the number of transactions and a transaction time. For example, when the first transaction request corresponds to the transfer transaction, the transaction identifier may be an order number of this transfer, the transaction time may be the time when the first transaction information is generated. That is, the time when a transfer request is submitted, and the number of transactions may be the number of transactions of the digital currency to be transacted.

At S1202, the first transaction information is signed by using a private key of the first terminal.

At S1203, a first trust chain is generated according to the signed first transaction information and the digital currency.

When the first trust chain is generated, the private key of the first terminal is used to sign, then the transaction chain is generated according to a signature of the first terminal and the first transaction information, and then the transaction chain and the digital currency are combined to generate the first trust chain.

For example, when the transaction chain is generated, the first transaction information and a public key of a second terminal are signed by using the private key of the first terminal to generate the first transaction chain, and then the first trust chain is generated according to the first transaction chain and the digital currency.

It is understandable that, a user of the first terminal is the payer, and a user of the second terminal is the payee. The public key of the second terminal may indicate the information of the payee, and the first transaction information and the public key of the second terminal are signed by using the private key of the first terminal to generate the first transaction chain. The generated first transaction chain is as shown in Fig. 2, so that the first transaction chain indicates not only the information of the payer, but also the information of the payee. That is, the first transaction chain may represent the transaction corresponding to the first transaction request between the first terminal and the second terminal.

In addition, the signed first transaction information is also encrypted by using the public key of the second terminal (payee) to generate the first transaction chain. A schematic diagram of the first transaction chain is as shown in Fig. 3. In this way, the first transaction chain may indicate not only the information of the payer, but also the information of the payee. That is, the first transaction chain also may represent the transaction corresponding to the first transaction request between the first terminal and the second terminal.

It is understandable that the above two first transaction chains in the above embodiments only differ in encryption methods. That is, as shown in Fig. 4, the transaction chains generated by different encryption methods all include the private key of the first terminal, the public key of the second terminal and the first transaction information. Accordingly, the second terminal has different verification methods for the first transaction chain, but both of which may represent the transaction corresponding to the first transaction request between the first terminal and the second terminal.

After the first transaction chain is generated, the first transaction chain and the digital currency are combined to generate the first trust chain for the offline transaction. The generated first trust chain is as shown in Fig. 5.

At S104, the first trust chain is sent to the second terminal, so that the second terminal verifies the first transaction information by using a public key of the first terminal to verify whether the digital currency is credible, thereby causing the first terminal and the second terminal to perform an offline transaction according to the first trust chain.

After the first terminal sends the first trust chain to the second terminal, the second terminal verifies the first transaction information by using the public key of the first terminal. When the verification is passed, it indicates that the second terminal successfully authenticates the signature of the first terminal, and the first transaction chain in the first trust chain is credible, thereby verifying that the digital currency in the first trust chain is credible. Therefore, the offline transaction between the second terminal and the first terminal is achieved according to the first trust chain.

The verification process of the second terminal for the first transaction information varies depending on the generation method of the first transaction chain. When the first transaction chain in the first trust chain is obtained by encrypting the signed first transaction information through the public key of the second terminal, the second terminal first decrypts the first transaction chain by using the private key of the second terminal to obtain the first transaction information signed by the private key of the first terminal, and then verifies the first transaction information by using the public key of the first terminal to obtain the first transaction information. Through this process, it can be seen that, in order to verify whether the first transaction information is credible, the second terminal needs to verify the signatures of the public key of the second terminal and the private key of the first terminal in sequence by using the private key of the second terminal and the public key of the first terminal. In other words, when the public key of the second terminal and the private key of the first terminal are verified successfully, it is determined that the verification of the first transaction information is passed, thereby determining that the digital currency is credible.

In addition, the second terminal further verifies each signature in the digital currency. For example, when signatures of the issuing institution, the central management institution of the issuing institution and/or the owner of the digital currency are recorded in the digital currency, the second terminal verifies the signatures of the issuing institution, the central management institution of the issuing institution and the owner respectively, so as to further ensure the credibility of the digital currency, thereby further improving the security of the offline transaction.

According to the method for verifying the digital currency in the transaction of the embodiments of the present disclosure, when determining the first transaction request, the first terminal (payer) signs the first transaction information indicated by the first transaction request by using the own private key, generates the first trust chain according to the signed first transaction information and the digital currency to be transacted indicated by the first transaction request, and sends the first trust chain to the second terminal (payee), so that the second terminal verifies the first transaction information in the first trust chain by using the public key of the first terminal to verify whether the digital currency is credible. When the digital currency is credible, the second terminal performs the offline transaction with the first terminal. Therefore, through the secure and effective verification of the digital currency in the transaction, the second terminal and the first terminal perform the offline transaction according to the first trust chain in the offline situation, so as to ensure the security of the offline transaction.

Fig. 13 is a schematic diagram of main steps of a method for verifying a digital currency in a transaction according to an embodiment of the present disclosure.

As shown in Fig. 13, the method for verifying the digital currency in the transaction of the embodiments of the present disclosure, when applied to a second terminal, mainly includes the following steps.

At S1301, a first trust chain sent by a first terminal is received. The first trust chain includes a digital currency to be transacted and first transaction information signed by using a private key of the first terminal.

At S1302, the first transaction information is verified by using a public key of the first terminal.

At S1303, when the verification is passed, it is determined that the digital currency is credible, so that the second terminal performs an offline transaction with the first terminal according to the first trust chain.

After the first terminal sends the first trust chain to the second terminal, the second terminal verifies the first transaction information by using the public key of the first terminal. When the verification is passed, it indicates that the second terminal successfully authenticates the signature of the first terminal, and the first transaction chain in the first trust chain is credible, thereby verifying that the digital currency in the first trust chain is credible. Therefore, the offline transaction between the second terminal and the first terminal is achieved according to the first trust chain.

The verification process of the second terminal for the first transaction information varies depending on the generation method of the first transaction chain. When the first transaction chain in the first trust chain is obtained by encrypting the signed first transaction information through the public key of the second terminal, the second terminal first decrypts the first transaction chain by using the private key of the second terminal to obtain the first transaction information signed by the private key of the first terminal, and then verifies the first transaction information by using the public key of the first terminal to obtain the first transaction information. Through this process, it can be seen that, in order to verify whether the first transaction information is credible, the second terminal needs to verify the signatures of the public key of the second terminal and the private key of the first terminal in sequence by using the private key of the second terminal and the public key of the first terminal. In other words, when the public key of the second terminal and the private key of the first terminal are verified successfully, it is determined that the verification of the first transaction information is passed, thereby determining that the digital currency is credible.

In addition, the second terminal further verifies each signature in the digital currency. For example, when signatures of the issuing institution, the central management institution of the issuing institution and/or the owner of the digital currency are recorded in the digital currency, the second terminal verifies the signatures of the issuing institution, the central management institution of the issuing institution and the owner respectively, so as to further ensure the credibility of the digital currency, thereby further improving the security of the offline transaction.

The same digital currency is transacted multiple times according to a denomination thereof and a transaction amount indicated by each transaction. For example, when the denomination of the digital currency is greater than the transaction amount of the one-time transaction, the digital currency has an available balance after the completion of the one-time transaction. The available balance is a difference between the denomination of the digital currency and the transaction amount of the one-time transaction, and the digital currency is used for performing the transaction again according to the available balance of the digital currency.

In the embodiments of the present disclosure, after performing the offline transaction with the first terminal according to the first trust chain sent by the first terminal, the second terminal further continues to perform the transaction with other terminals (such as a fourth terminal) again according to the first trust chain, so that the plurality of terminals may perform the transaction multiple times according to the first trust chain. For ease of description, the offline transaction between the second terminal and the first terminal is referred to as a primary transaction, and the offline transaction between the second terminal and the fourth terminal is referred to as a secondary transaction below. The fourth terminal may be the same as or different from the first terminal. When the fourth terminal is the same as the first terminal, it indicates that the payee and the payer are exchanged in the secondary transaction. That is, the first terminal is the payer, and the second terminal is the payee in the primary transaction; and the second terminal is the payer, and the first terminal is the payee in the secondary transaction.

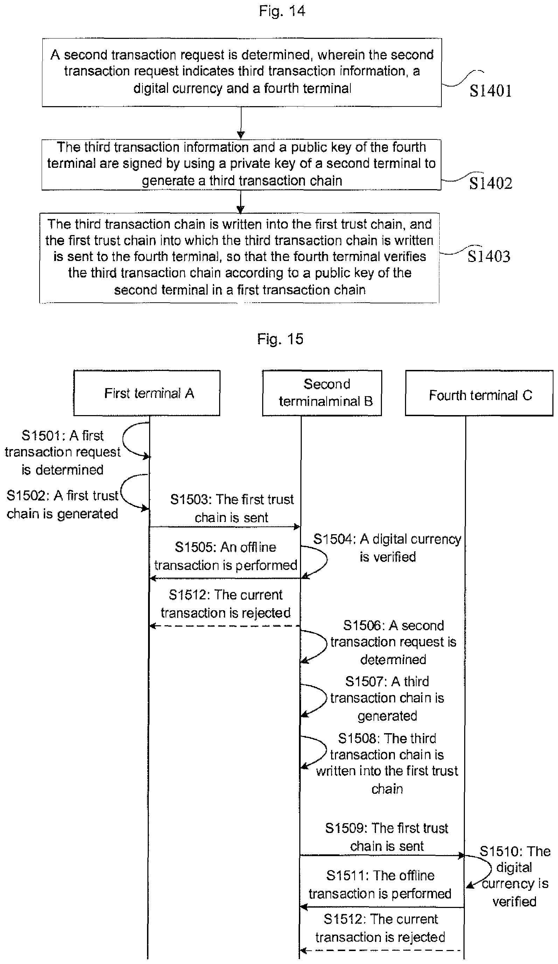

In one embodiment of the present disclosure, as shown in Fig. 14, a process of a second terminal performing a secondary transaction according to a first trust chain may include the following steps.

At S1401, a second transaction request is determined. The second transaction request indicates third transaction information, a digital currency and a fourth terminal.

The second transaction request is automatically generated when a user of the second terminal (a payer of the secondary transaction) performs the transaction, and the digital currency indicated by the second transaction request is the digital currency in the first trust chain, indicating that the first trust chain is used for this transaction.

At S1402, the third transaction information and a public key of a fourth terminal are signed by using a private key of the second terminal to generate a third transaction chain.

It is understandable that the generation process of the third transaction chain is the same as the generation process of the first transaction chain or the second transaction chain. That is, the third transaction information and the public key of the fourth terminal are signed by using the private key of the second terminal to generate the third transaction chain. For example, the third transaction information and the public key of the fourth terminal are signed by using the private key of the second terminal to generate the third transaction chain. Or, the third transaction information is signed by the private key of the second terminal, and then the third transaction information signed by the private key of the second terminal is encrypted by using the public key of the fourth terminal to generate the third transaction chain.

At S1403, the third transaction chain is written into the first trust chain, and the first trust chain into which the third transaction chain is written is sent to the fourth terminal, so that the fourth terminal verifies the third transaction chain according to a public key of the second terminal in the first transaction chain.

After the third transaction chain is generated, the third transaction chain is written into the first trust chain to form a new first trust chain, and the structure of the new first trust chain structure is as shown in Fig. 9. Because the third transaction chain represents the transaction corresponding to the second transaction request between the second terminal and the fourth terminal, the fourth terminal verifies the third transaction information and digital currency according to the new first trust chain, and achieves, when the verification of the digital currency is passed, the offline transaction between the fourth terminal and the second terminal according to the new first trust chain. The verification process of the new first trust chain is the same as the above verification process of the second terminal for the first trust chain, which will not be elaborated herein.

It is understandable that, as the number of transactions increases, an available balance of the digital currency gradually decreases, and the later the transaction, the lower the corresponding maximum transaction amount. For example, when the denomination of the digital currency is 100, and the digital currency is used for a primary transaction, the maximum transaction amount corresponding to the primary transaction is 100. Assuming that the transaction amount corresponding to the primary transaction is 60, the available balance of the digital currency is 40 after the completion of the primary transaction. Then, the maximum transaction amount corresponding to a secondary transaction performed by using the digital currency is 40. Assuming that the transaction amount corresponding to the secondary transaction is 30, the available balance of the digital currency is 10 after the completion of the secondary transaction. Then, the maximum transaction amount corresponding to a tertiary transaction performed by using the digital currency is 10. It can be seen that, as the number of transactions increases, the maximum amount corresponding to each transaction gradually decreases.

Therefore, when receiving the first trust chain, a receiving terminal (payee) of the trust chain further performs verification according to the available balance of the digital currency and the transaction amount corresponding to the transaction information. The receiving terminal performs, when the available balance of the digital currency is not less than the transaction amount corresponding to the transaction information, the offline transaction with a sending terminal (payer) of the first trust chain according to the digital currency, so as to further improve the security of the offline transaction.

According to the above embodiment, as shown in Fig. 9, one first trust chain may include a plurality of transaction chains corresponding to a plurality of pieces of transaction information respectively. The plurality of pieces of transaction information may be the above first transaction information and the third transaction information, and the corresponding transaction chains are the first transaction chain and the third transaction chain respectively. The plurality of transaction chains represent that the digital currency in the first trust chain is transacted multiple times, and the objects of the transactions are different.

According to the above generation process of the first trust chain, it is understandable that only the transaction corresponding to the last transaction information in the first trust chain is the transaction corresponding to the receiving terminal of the first trust chain. For example, when the first trust chain includes the first transaction chain and the third transaction chain, the transaction corresponding to the first transaction chain (primary transaction) is the offline transaction between the first terminal and the second terminal, the transaction corresponding to the third transaction chain (secondary transaction) is the offline transaction between the second terminal and the fourth terminal, and only the transaction corresponding to the third transaction chain generated last is the transaction corresponding to the receiving terminal (fourth terminal) of the first trust chain, so that when the fourth terminal redeems the digital currency, the digital currency is exported only according to the transaction amount corresponding to the related transaction (secondary transaction).

It is worth mentioning that each transaction chain in the first trust chain may include a timestamp. The last transaction information in the first trust chain may be determined according to the timestamps of the plurality of transaction chains. That is, the transaction information corresponding to the transaction chain closest to the current time is the last transaction information in the first trust chain.

When the digital currency is exported, the receiving terminal of the first trust chain needs to communicate with a corresponding currency management apparatus online to request the export of the digital currency, namely redemption of the digital currency, from the corresponding currency management apparatus according to the digital currency in the first trust chain and the transaction amount included in the last transaction in the first trust chain.

According to the above embodiment, taking a process of the first terminal A, the second terminal B and the fourth terminal C achieving twice transactions as an example, a method for verifying a digital currency in a transaction provided by the embodiments of the present disclosure is described in detail. As shown in Fig. 15, the process may include the following steps.

At S1501, the first terminal A determines a first transaction request. The first transaction request indicates a digital currency to be transacted and first transaction information.

At S1502, the first terminal A signs the first transaction information and a public key of the second terminal B by using a private key of the first terminal A to generate a first transaction chain, and generates a first trust chain according to the first transaction chain and the digital currency.

At S1503, the first terminal A sends the first trust chain to the second terminal B.

At S1504, the second terminal B decrypts the first trust chain by using a private key of the second terminal B to obtain the first transaction information and the public key of the second terminal B, and verifies the private key of the first terminal A by using a public key of the first terminal A, so as to verify whether the digital currency in the first trust chain is credible. When the digital currency is credible, S1505 is executed, otherwise S1511 is executed.

At S1505, the second terminal B performs, according to the digital currency, an offline transaction corresponding to a transaction amount included in the first transaction information with the first terminal A.

After the second terminal B and the first terminal A achieve the offline transaction, a primary transaction is completed.

At S1506, the second terminal B determines a second transaction request. The second transaction request indicates third transaction information and the digital currency.

Here, the digital currency indicated by the second transaction request and the digital currency indicated by the first transaction request are the same digital currency, that is, the first trust chain corresponding to the digital currency is used to continue to perform a secondary transaction.

At S1507, the second terminal B signs the third transaction information and a public key of the fourth terminal C by using the private key of the second terminal to generate a third transaction chain.

At S1508, the second terminal B writes the third transaction chain into the first trust chain.

At S1509, the first trust chain into which the third transaction chain is written is sent to the fourth terminal C.

At S1510, the fourth terminal C verifies whether the digital currency in the first trust chain is credible according to the public key of the second terminal B, and verifies the digital currency in the first trust chain according to the first trust chain into which the third transaction chain is written. When the digital currency is credible, S1511 is executed, otherwise S1512 is executed.

At S1511, the fourth terminal C performs, according to the digital currency, an offline transaction corresponding to the transaction amount included in the third transaction information with the second terminal B.

At S1512, the current transaction is rejected.

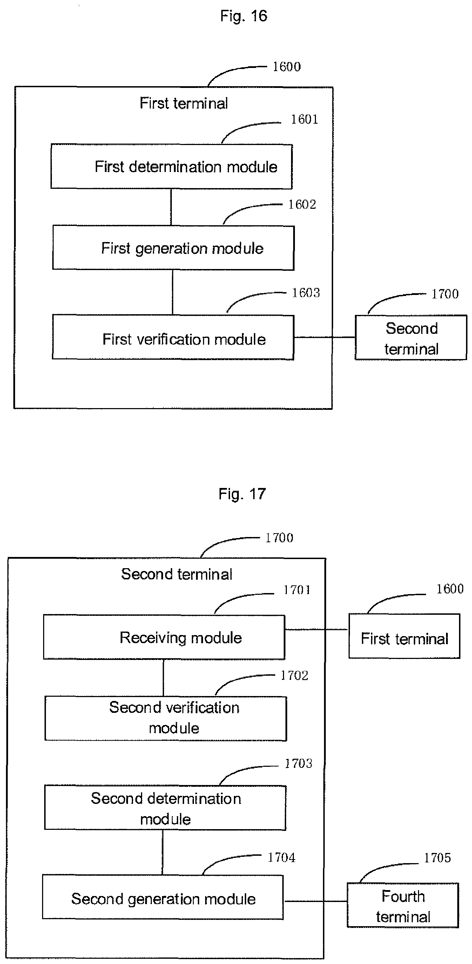

Fig. 16 is a schematic diagram of main modules of a first terminal for verifying a digital currency in a transaction according to an embodiment of the present disclosure.

As shown in Fig. 16, the first terminal 1600 for verifying the digital currency in the transaction of the embodiments of the present disclosure includes a first determination module 1601, a first generation module 1602 and a first verification module 1603.

The first determination module 1601 is configured to determine a first transaction request. The first transaction request indicates a digital currency to be transacted and first transaction information.

The first generation module 1602 is configured to sign the first transaction information by using a private key of the first terminal, and generate a first trust chain according to the signed first transaction information and the digital currency.

The first verification module 1603 is configured to send the first trust chain to a second terminal 1700, so that the second terminal 1700 verifies the first transaction information by using a public key of the first terminal 1600 to verify whether the digital currency is credible, thereby causing the first terminal 1600 to perform an offline transaction with the second terminal 1700 according to the first trust chain.

In one embodiment of the present disclosure, the first generation module 1602 is configured to sign the first transaction information and a public key of the second terminal by using the private key of the first terminal to generate a first transaction chain, and generate the first trust chain according to the first transaction chain and the digital currency.

In one embodiment of the present disclosure, the first generation module 1602 is configured to encrypt the signed first transaction information by using a public key of the second terminal to generate a first transaction chain, and generate the first trust chain according to the first transaction chain and the digital currency.

Fig. 17 is a schematic diagram of main modules of a second terminal for verifying a digital currency in a transaction according to an embodiment of the present disclosure.

As shown in Fig. 17, the second terminal 1700 for verifying the digital currency in the transaction of the embodiments of the present disclosure includes a receiving module 1701 and a second verification module 1702.

The receiving module 1701 is configured to receive a first trust chain sent by a first terminal. The first trust chain includes a digital currency to be transacted and first transaction information signed by using a private key of the first terminal.

The second verification module 1702 is configured to verify the first transaction information by using a public key of the first terminal; and determine, when the verification is passed, that the digital currency is credible, so that the second terminal performs an offline transaction with the first terminal according to the first trust chain.

In one embodiment of the present disclosure, the first trust chain further includes a public key of the second terminal. The second verification module 1702 is configured to verify the public key of the second terminal by using the private key of the first terminal; and determine, when the verification of the public key of the second terminal and the first transaction information is passed, that the digital currency is credible.

In one embodiment of the present disclosure, the second terminal 1700 may further include a second determination module 1703 and a second generation module 1704.

The second determination module 1703 is configured to determine a second transaction request. The second transaction request indicates third transaction information and the digital currency.

The second generation module 1704 is configured to sign the third transaction information and a public key of a fourth terminal by using a private key of the second terminal to generate a third transaction chain, write the third transaction chain into the first trust chain, and send the first trust chain into which the third transaction chain is written to the fourth terminal 1705.

In one embodiment of the present disclosure, the second generation module 1704 is configured to sign the third transaction information and the public key of the fourth terminal by using the private key of the second terminal to generate the third transaction chain.

In one embodiment of the present disclosure, when it is determined that the digital currency is credible and the first trust chain includes a plurality of pieces of transaction information, the second verification module 1702 is further configured to export the digital currency according to a transaction amount included in the last of the plurality of pieces of transaction information.

According to the first terminal and/or the second terminal of the embodiments of the present disclosure, when determining the first transaction request, the first terminal signs the first transaction information indicated by the first transaction request by using the own private key, generates the first trust chain according to the signed first transaction information and the digital currency to be transacted indicated by the first transaction request, and sends the first trust chain to the second terminal, so that the second terminal verifies the first transaction information in the first trust chain by using the public key of the first terminal to verify whether the digital currency is credible. When the digital currency is credible, the second terminal may perform the offline transaction with the first terminal. Therefore, through the secure and effective verification of the digital currency in the transaction, the second terminal perform the offline transaction with the first terminal according to the first trust chain in the offline situation, so as to ensure the security of the offline transaction.

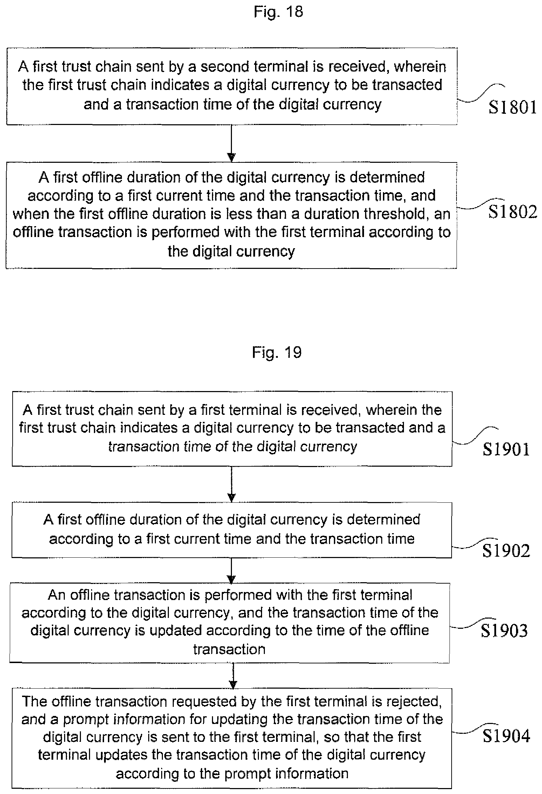

Fig. 18 is a schematic diagram of main steps of a method for managing an offline duration of a digital currency when applied to a second terminal according to an embodiment of the present disclosure.

As shown in Fig. 18, the method for managing the offline duration of the digital currency, when applied to the second terminal, mainly includes the following S1801 to S1802.

At S1801, a first trust chain sent by a first terminal is received. The first trust chain indicates a digital currency to be transacted and a transaction time of the digital currency.

The first trust chain is generated according to the digital currency to be transacted and the transaction information. The first trust chain sent by the first terminal is generated when performing a transaction with another terminal. For example, when the first terminal performs the transaction with a sixth terminal, the sixth terminal is a payer and the first terminal is a payee. The sixth terminal generate the first trust chain corresponding to the transaction through the following process that: the transaction information and a public key of the first terminal are signed by using a private key of the sixth terminal to generate a fourth transaction chain, and then the first trust chain is generated according to the fourth transaction chain and the digital currency to be transacted. Or, the sixth terminal also generates the first trust chain through the following process that: the transaction information is signed by using the private key of the sixth terminal, the signed transaction information is encrypted by using the public key of the first terminal to generate the fourth transaction chain, and then the first trust chain is generated according to the fourth transaction chain and the digital currency to be transacted.

When the sixth terminal performs the transaction with the first terminal, the sixth terminal sends the first trust chain to the first terminal, and the first terminal verifies the transaction information in the trust chain by using the own private key and the public key of the sixth terminal. When the verification of the transaction information is passed and a transaction time of the digital currency meets the requirements for offline duration management, the first terminal performs an offline transaction with the sixth terminal according to the digital currency.

After the transaction between the first terminal and the sixth terminal, the transaction time of the digital currency in the first trust chain is the time of the transaction between the first terminal and the sixth terminal. When the first terminal requests the transaction with the second terminal (at this time, the first terminal is the payer and the second terminal is the payee), the first terminal generates the first transaction chain according to the transaction situation. The generation process of the first transaction chain is similar to the generation process of the fourth transaction chain, which will not be elaborated herein. Then, the first terminal writes the first transaction chain into the first trust chain to generate a new first trust chain. The new first trust chain is then sent to the second terminal. It is understandable that the new first trust chain here is the first trust chain received by the second terminal in S1801, and the transaction time of the digital currency indicated by the first trust chain is the time of the transaction between the first terminal and the sixth terminal. The sixth terminal may be any of the above second, third, fourth or fifth terminal, or any other terminal other than the above second, third, fourth or fifth terminal.

At S1802, a first offline duration of the digital currency is determined according to a first current time and the transaction time, and when the first offline duration is less than a duration threshold, an offline transaction is performed with the first terminal according to the digital currency.

It is understandable that the first current time is the current time when the step of "determining the first offline duration of the digital currency according to the first current time and the transaction time" is executed. For example, the first current time is 10:00:00 on January 1, 2020. If the time of the transaction between the first terminal and the sixth terminal is 9:00:00 on December 31, 2019, the transaction time of the digital currency indicated by the first trust chain is 9:00:00 on December 31, 2019. The first offline duration between the first current time and the transaction time of the digital currency is 25 hours. That is, the digital currency has been offline for 25 hours after the last transaction. Assuming that the duration threshold is 30 hours, the first offline duration of the digital currency is less than the duration threshold, and the second terminal performs the offline transaction with the first terminal according to the digital currency. Therefore, the security of the offline transaction is ensured by controlling the offline duration of the digital currency.

After the second terminal performs the offline transaction with the first terminal, the second terminal updates the transaction time of the digital currency according to the time of the offline transaction. For example, the second terminal generates a timestamp according to the time of the offline transaction, and then writes the generated timestamp into the digital currency or the trust chain to update the transaction time of the digital currency.

When the first offline duration of the digital currency is not less than the duration threshold, the second terminal rejects the offline transaction requested by the first terminal, and sends a prompt information for updating the transaction time of the digital currency to the first terminal, so that the first terminal updates the transaction time of the digital currency according to the prompt information.

In the embodiment, when the first offline duration of the digital currency is not less than the duration threshold, it indicates that the digital currency has been offline for a long time after the end of the last transaction, so that the risk of this transaction is high. Therefore, the second terminal rejects to perform the offline transaction with the first terminal. Further, in order to facilitate the normal operation of the transaction, the second terminal further sends the prompt message to the first terminal to prompt the first terminal to update the transaction time of the digital currency.

The first terminal updates the transaction time of the digital currency by communicating with a currency management apparatus. When the first terminal establishes a communication connection with the currency management apparatus, the currency management apparatus updates the transaction time of the digital currency held by the first terminal according to login information of the first terminal. That is, once the first terminal changes from an offline state to an online state, the transaction time of the digital currency may be updated by the currency management apparatus, and the updated transaction time is the time when the currency management apparatus is logged in.

It is understandable that the second terminal also uses the same manner to update the transaction time of the digital currency. In one embodiment of the present disclosure, when the second terminal establishes a communication connection with the currency management apparatus, the second terminal send the digital currency to the currency management apparatus, so that the currency management apparatus updates the transaction time of the digital currency according to a second current time, and the second terminal receives the digital currency returned by the currency management apparatus.

The second current time is the time when the second terminal establishes the communication connection with the currency management apparatus. When updating the transaction time of the digital currency, the digital currency management apparatus may generate a timestamp indicating the transaction time of the digital currency according to the second current time, so that the transaction time of the digital currency is updated from the last transaction time to the time when the second terminal is online (the communication connection with the currency management apparatus is established).

In addition, the currency management apparatus that communicates with the second terminal and the currency management apparatus that communicates with the first terminal may be the same currency management apparatus or different currency management apparatuses. For example, when the second terminal and the first terminal correspond to the same bank, they communicate with the same currency management apparatus. When the second terminal and the first terminal correspond to different banks, they communicate with different currency management apparatuses.

According to the above embodiment, as shown in Fig. 19, a method for managing an offline duration of a digital currency, when applied to a second terminal, may include the following steps.

At S1901, a first trust chain sent by a first terminal is received. The first trust chain includes a digital currency to be transacted and a transaction time of the digital currency.

At S1902, a first offline duration of the digital currency is determined according to a first current time and the transaction time, when the first offline duration is less than a duration threshold, S1903 is executed, and when the first offline duration is not less than the duration threshold, S1904 is executed.

In Fig. 19, m represents the first offline duration and n represents the duration threshold.

At S1903, an offline transaction is performed with the first terminal according to the digital currency, and the transaction time of the digital currency is updated according to the time of the offline transaction. Then, the current process ends.

At S1904, the offline transaction requested by the first terminal is rejected, and a prompt information for updating the transaction time of the digital currency is sent to the first terminal, so that the first terminal updates the transaction time of the digital currency according to the prompt information.

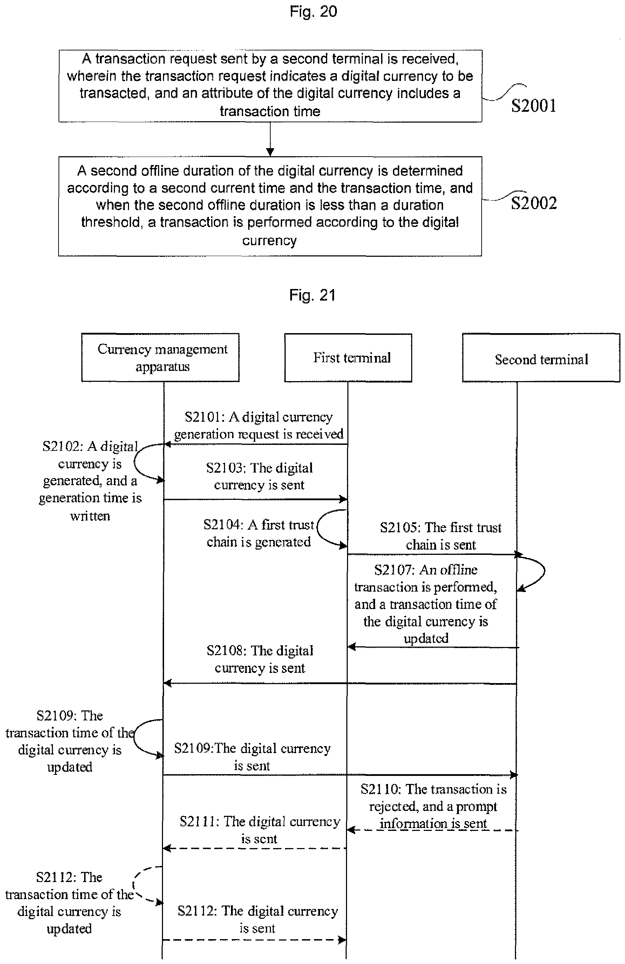

When the second terminal performs the transaction with a currency management apparatus, for example, when the second terminal performs a payment operation or achieves the redemption of the digital currency through the currency management apparatus, the currency management apparatus also checks the digital currency according to the offline duration of the digital currency. For example, as shown in Fig. 20, a method for managing an offline duration of a digital currency, when applied to a currency management apparatus, mainly includes the following S2001 to S2002.

At S2001, a transaction request sent by a second terminal is received. The transaction request indicates a digital currency to be transacted, and an attribute of the digital currency includes a transaction time.

The transaction time of the digital currency is the time for the last transaction of the digital currency. For example, the digital currency is sent to the second terminal by the first terminal through the first trust chain when the first terminal and the second terminal performs an offline transaction, and then the transaction time of the digital currency is the time of the offline transaction between the first terminal and the second terminal. The transaction time may be written into the digital currency or the first trust chain in the form of timestamp. In addition, the transaction time of the digital currency may also be the time when the terminal where the digital currency is located communicates with the currency management apparatus last time. For example, after the first terminal and the second terminal perform the offline transaction, the second terminal has been online, that is, the second terminal establishes a communication connection with the currency management apparatus. The transaction time of the digital currency in the second terminal is updated to the time when the second terminal is online, namely the time when the second terminal communicates with the currency management apparatus. Similarly, the online time is also written into the digital currency or the first trust chain in the form of timestamp.

At S2002, a second offline duration of the digital currency is determined according to a second current time and the transaction time, and when the second offline duration is less than a duration threshold, a transaction is performed according to the digital currency.

The second current time is the time when the second terminal establishes the communication connection with the currency management apparatus, namely the time when the second terminal changes from the offline state to the online state. For example, when the second current time is 10:00:00 January 2, 2020, and the transaction time of the digital currency is the time of the offline transaction between the first terminal and the second terminal (10:00:00 January 1, 2020), the second offline duration is 24 hours. In a case where the duration threshold is 30 hours, the currency management apparatus allows the second terminal to perform the payment operation or achieve transactions such as the redemption of the digital currency. It is worth mentioning that the duration threshold managed by the currency management apparatus and the duration threshold managed by the second terminal may be the same value or different values.

In other words, when the second offline duration is less than the duration threshold, the currency management apparatus achieves a payment process requested by the second terminal according to the digital currency, or redeems the digital currency for the second terminal. The payment process requested by the second terminal may be a process of transferring money to other terminals when performing the online transaction with other terminals. The redemption process of the digital currency may be a process of the second terminal exporting the digital currency according to the trust chain. A denomination of the exported digital currency corresponds to a transaction amount indicated by the last transaction chain in the trust chain, and the user information of the digital currency is determined as the user information corresponding to the second terminal. That is, the owner of the digital currency is determined as the user corresponding to the second terminal.

After the currency management apparatus performs the transaction according to the digital currency, the currency management apparatus updates the transaction time of the digital currency according to the transaction time (second current time). For example, the currency management apparatus may generate the timestamp according to the transaction time, and then writes the generated timestamp into the digital currency to update the transaction time of the digital currency.

In order to facilitate the management of the offline duration of the digital currency, when generating the digital currency, the currency management apparatus writes the generation time of the digital currency into the digital currency. For example, in one embodiment of the present disclosure, the currency generation apparatus receives a digital currency generation request sent by a fifth terminal, the digital currency generation request indicating a denomination of the requested digital currency and user information corresponding to the fifth terminal, generates a digital currency corresponding to the user information and the denomination, writes a generation time of the digital currency into the digital currency, and notifies the fifth terminal of the digital currency.

Because one single digital currency is transacted multiple times, the fifth terminal may be a terminal (first terminal) that performs the transaction with the second terminal, or merely a terminal that exports the digital currency. That is, the fifth terminal and the first terminal may be the same terminal or different terminals. For example, the fifth terminal may be any one of the first, second, third and fourth terminals, or any other terminal other than the above first, second, third and fourth terminals. For example, when the fifth terminal and the first terminal are different terminals, after exporting the digital currency, the fifth terminal performs the transaction with the first terminal according to the digital currency, and then the first terminal continues to perform the transaction with the second terminal according to the digital currency. In the embodiments of the present disclosure, for ease of description, the first terminal and the fifth terminal are different terminals as an example.

A user of the fifth terminal sends the digital currency generation request to the currency management apparatus through the fifth terminal according to the demand for digital currency export. The digital currency generation request indicates the denomination of the requested digital currency and the user information corresponding to the fifth terminal. For example, when the user needs to export the digital currency with the denomination of 10, the denomination indicated by the digital currency generation request is 10, and the user information may be login information of the fifth terminal. It is understandable that the user information is pre-recorded in the currency management apparatus, so that the currency management apparatus may generate the digital currency corresponding to the user information according to the digital currency generation request. After generating the digital currency, the currency management apparatus may set the timestamp for indicating the generation time of the digital currency, and writes the timestamp into the digital currency.

After generating the requested digital currency, the currency management apparatus may directly notify the fifth terminal of the generated digital currency. The contents of the digital currency may include: a unique identifier of the digital currency (such as a serial number), an identifier of the currency management apparatus, a signature of the currency management apparatus and a timestamp corresponding to the generation time of the digital currency. It is understandable that the timestamp corresponding to the generation time of the digital currency is the initial transaction time of the digital currency. Then, when performing the transaction by using the digital currency, the fifth terminal updates the transaction time of the digital currency by means of generating a new timestamp according to the transaction time.

According to the above embodiment, when the fifth terminal is the same terminal as the first terminal (hereinafter referred to as the first terminal), as shown in Fig. 21, a method for managing an offline duration of a digital currency provided by the embodiments of the present disclosure may include the following steps.

At S2101, a currency management apparatus receives a digital currency generation request sent by the first terminal. The digital currency generation request indicates a denomination of the requested digital currency and user information corresponding to the first terminal.

At S2102, the currency management apparatus generates the digital currency corresponding to the user information and the denomination, and writes a generation time of the digital currency into the digital currency.

The generation time of the digital currency is the initial transaction time of the digital currency.

At S2103, the currency management apparatus notifies the first terminal of the digital currency.

At S2104, the first terminal generates a first trust chain according to the digital currency and the transaction information.

At S2105, the first terminal sends the first trust chain to a second terminal. The first trust chain indicates a digital currency to be transacted and a transaction time of the digital currency, and the transaction time is the generation time of the digital currency.

At S2106, the second terminal determines a first offline duration of the digital currency according to a first current time and the transaction time of the digital currency, and when the first offline duration is less than a duration threshold, S2107 to S2109 are executed, otherwise S2110 to S2112 are executed.

At S2107, the second terminal performs an offline transaction with the first terminal according to the digital currency, and updates the transaction time of the digital currency according to the time of the offline transaction.

At S2108, when establishing the communication connection with the currency management apparatus, the second terminal sends the digital currency to the currency management apparatus.

At S2109, the currency management apparatus updates the transaction time of the digital currency according to a second current time, and sends the digital currency after the transaction time is updated to the second terminal.

At S2110, the offline transaction requested by the first terminal is rejected, and a prompt information for updating the transaction time of the digital currency is sent to the first terminal.

At S2111, the first terminal establishes a communication connection with the currency management apparatus according to the prompt information, and sends the digital currency to the currency management apparatus.

At S2112, the currency management apparatus updates the transaction time of the digital currency according to a third current time, and sends the digital currency after the transaction time is updated to the first terminal.

According to the method for managing the offline duration of the digital currency of the embodiments of the present disclosure, when receiving the trust chain sent by the first terminal, the second terminal determines the first offline duration of the digital currency according to the first current time and the transaction time of the digital currency to be transacted indicated by the trust chain. The first offline duration is the duration between the first current time and the last transaction time of the digital currency. Only when the determined first offline duration is less than the duration threshold, the second terminal performs the offline transaction with the first terminal according to the digital currency. Therefore, the security of the offline transaction is ensured by controlling the offline duration of the digital currency in the transaction.

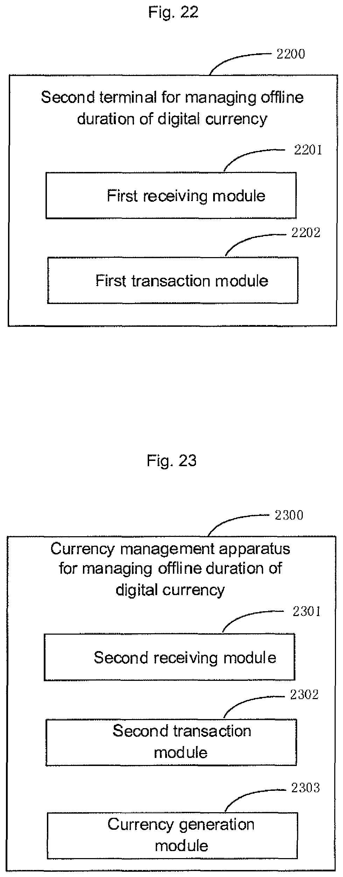

Fig. 22 is a schematic diagram of main modules of a second terminal for managing an offline duration of a digital currency according to an embodiment of the present disclosure.

As shown in Fig. 22, the second terminal 2200 for managing the offline duration of the digital currency of the embodiments of the present disclosure includes a first receiving module 2201 and a first transaction module 2202.

The first receiving module 2201 is configured to receive a trust chain sent by a first terminal. The trust chain indicates a digital currency to be transacted and a transaction time of the digital currency.

The first transaction module 2202 is configured to determine a first offline duration of the digital currency according to a first current time and the transaction time, and perform, when the first offline duration is less than a duration threshold, an offline transaction with the first terminal according to the digital currency.

In one embodiment of the present disclosure, the first transaction module 2202 is further configured to reject, when the first offline duration is not less than the duration threshold, the offline transaction requested by the first terminal, and send a prompt information for updating the transaction time of the digital currency to the first terminal, so that the first terminal updates the transaction time of the digital currency according to the prompt information.

In one embodiment of the present disclosure, the first transaction module 2202 is further configured to send the digital currency to a currency management apparatus when establishing a communication connection with the currency management apparatus, so that the currency management apparatus updates the transaction time of the digital currency according to a second current time; and receive the digital currency returned by the currency management apparatus.

In one embodiment of the present disclosure, the first transaction module 2202 is further configured to update the transaction time of the digital currency according to the time of the offline transaction.

According to the second terminal for managing the offline duration of the digital currency of the embodiments of the present disclosure, when receiving the trust chain sent by the first terminal, the second terminal determines the first offline duration of the digital currency according to the first current time and the transaction time of the digital currency to be transacted indicated by the trust chain. The first offline duration is the duration between the first current time and the last transaction time of the digital currency. Only when the determined first offline duration is less than the duration threshold, the second terminal performs the offline transaction with the first terminal according to the digital currency. Therefore, the security of the offline transaction is ensured by controlling the offline duration of the digital currency in the transaction.

Fig. 23 is a schematic diagram of main modules of a currency management apparatus for managing an offline duration of a digital currency according to an embodiment of the present disclosure.

As shown in Fig. 23, the currency management apparatus 2300 for managing the offline duration of the digital currency of the embodiments of the present disclosure includes a second receiving module 2301 and a second transaction module 2302.

The second receiving module 2301 is configured to receive a transaction request sent by a second terminal. The transaction request indicates a digital currency to be transacted, and an attribute of the digital currency includes a transaction time.

The second transaction module 2302 is configured to determine a second offline duration of the digital currency according to a second current time and the transaction time, and perform, when the second offline duration is less than a duration threshold, a transaction according to the digital currency.

In one embodiment of the present disclosure, the second transaction module 2302 is further configured to update the transaction time of the digital currency according to the second current time.

In one embodiment of the present disclosure, the second transaction module 2302 is configured to achieve a payment process requested by the second terminal according to the digital currency; or, redeem the digital currency for the second terminal.

In one embodiment of the present disclosure, the currency management apparatus 2300 further includes a currency generation module 2303.

The currency generation module 2303 is configured to receive a digital currency generation request sent by a fifth terminal, the digital currency generation request indicating a denomination of the requested digital currency and user information corresponding to the fifth terminal; generate a digital currency corresponding to the user information and the denomination, and write generation time of the digital currency into the digital currency; and notify the fifth terminal of the digital currency.

In one embodiment of the present disclosure, a system for managing an offline duration of a digital currency is further provided. The system includes the second terminal as described in any of the above embodiments and the currency management apparatus as described in any of the above embodiments.

According to the system for managing the offline duration of the digital currency of the embodiments of the present disclosure, when receiving the trust chain sent by the first terminal, the second terminal determines the first offline duration of the digital currency according to the first current time and the transaction time of the digital currency to be transacted indicated by the trust chain. The first offline duration is the duration between the first current time and the last transaction time of the digital currency. Only when the determined first offline duration is less than the duration threshold, the second terminal performs the offline transaction with the first terminal according to the digital currency. Therefore, the security of the offline transaction is ensured by controlling the offline duration of the digital currency in the transaction.

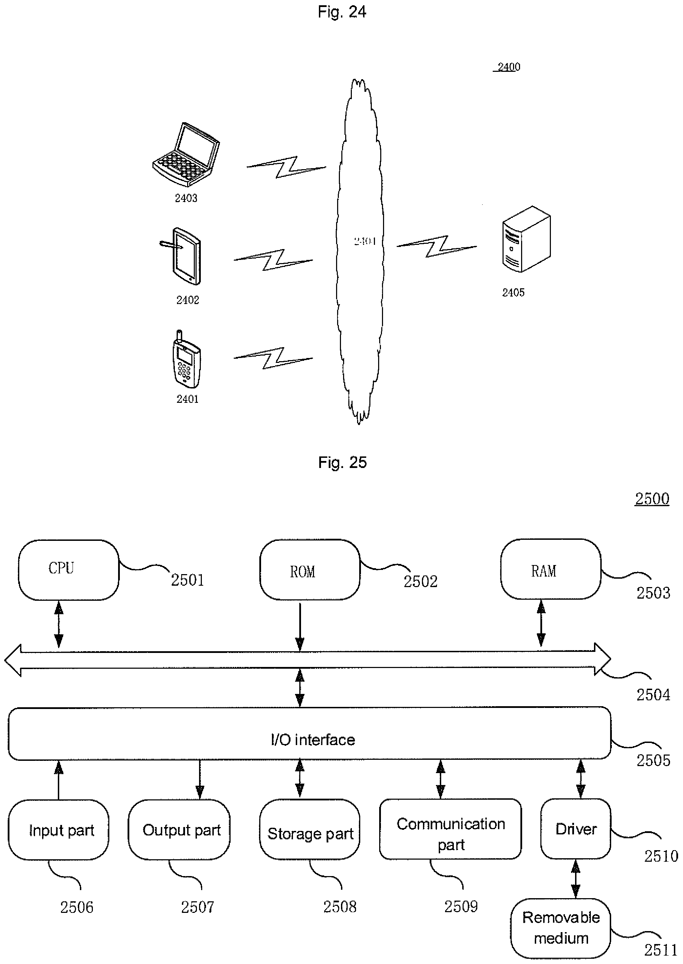

Fig. 24 shows an exemplary system architecture 2400 in which a method for splitting a digital currency in a transaction or an apparatus for splitting a digital currency in a transaction according to an embodiment of the present disclosure may be applied.

As shown in Fig. 24, the system architecture 2400 may include terminal devices 2401, 2402 and 2403, a network 2404, and a server 2405. The network 2404 is configured to provide media for communication links between the terminal devices 2401, 2402 and 2403, and the server 2405. The network 2404 may include various connection types, such as wired, wireless communication links, or fiber optic cables.

A user may interact with the server 2405 by using the terminal devices 2401, 2402 and 2403 through the network 2404 to receive or send messages, etc. Various communication client applications, such as shopping applications, web browser applications, search applications, instant messaging tools, email clients, social platform software, etc., may be installed on the terminal devices 2401, 2402 and 2403.

The terminal devices 2401, 2402 and 2403 may be a variety of electronic devices having a display screen and supporting web browsing, including, but is not limited to, smartphones, tablets, laptops, desktops, and the like.

The server 2405 may be a server that provides various services, for example, a background management server that provides support for shopping websites browsed by the user through the terminal devices 2401, 2402 and 2403. The background management server may perform analysis and other processing on received data, such as a product information query request, and feed back a processing result (such as target push information and product information) to the terminal device.

It is to be noted that the method for splitting the digital currency in the transaction provided by the embodiments of the present disclosure may be generally executed by the terminal devices 2401, 2402 and 2403.

It is to be understood that the number of terminal devices, networks, and servers in Fig. 24 is merely illustrative. There may be any number of terminal devices, networks, and servers according to implementation requirements.

Referring to Fig. 25 below, which shows a schematic structural diagram of a computer system 2500 suitable for implementing a terminal device according to an embodiment of the present disclosure. The terminal device shown in Fig. 25 is merely an example and should not impose any restrictions on the functionality and scope of use of the embodiments of the present disclosure.

As shown in Fig. 25, the computer system 2500 includes a Central Processing Unit (CPU) 2501 that performs various suitable actions and processing according to programs stored in a Read Only Memory (ROM) 2502 or loaded from a storage part 2508 into a Random Access Memory (RAM) 2503. Various programs and data required for the operation of the system 2500 are also stored in the RAM 2503. The CPU 2501, the ROM 2502, and the RAM 2503 are connected to each other through a bus 2504. An Input/Output (I/O) interface 2505 is also connected to the bus 2504.

The following components are connected to the I/O interface 2505: an input part 2506 including a keyboard, a mouse, etc.; an output part 2507 including a Cathode Ray Tube (CRT), a Liquid Crystal Display (LCD), a speaker, etc.; a storage part 2508 including a hard disk, etc.; and a communication part 2509 including a network interface card such as a Local Area Network (LAN) card and a modem. The communication part 2509 performs communication processing via a network such as Internet. A driver 2510 is also connected to the I/O interface 2505 as needed. A removable medium 2511, such as a magnetic disk, an optical disk, a magneto-optical disk, or a semiconductor memory, is installed on the driver 2510 as needed, so that a computer program read therefrom is installed into the storage part 2508 as needed.

In particular, the process described above with reference to a flowchart may be implemented as a computer software program according to the disclosed embodiments of the present disclosure. For example, the disclosed embodiments of the present disclosure include a computer program product including a computer program carried on a computer-readable medium, the computer program including a program code for performing the method shown in the flowchart. In such an embodiment, the computer program may be downloaded and installed from the network via the communication part 2509, and/or from the removable medium 2511. The computer program is executed by the CPU 2501 to perform the functions limited in the system of the present disclosure.

It is to be noted that the computer-readable medium shown in the present disclosure may be either a computer-readable signal medium or a computer-readable storage medium or any combination thereof. The computer-readable storage medium may be, but not limited to, for example, an electrical, magnetic, optical, electromagnetic, infrared, or semiconductor system, apparatus or device, or any combination thereof. More specific examples (a non-exhaustive list) of the computer-readable storage medium may include an electrical connector with one or more wires, a portable disk, a hard disk, an RAM, an ROM, an Erasable Programmable ROM (EPROM or a flash memory), an optical fiber, a Compact Disc ROM (CD-ROM), an optical storage device, a magnetic storage device, or any proper combination thereof. In the present disclosure, the computer-readable storage medium may be any physical medium including or storing a program, and the program may be used by or in combination with an instruction execution system, apparatus or device. However, in the present disclosure, the computer-readable signal medium may include a data signal in a baseband or propagated as part of a carrier, a computer-readable program code being carried therein. A plurality of forms may be adopted for the propagated data signal, including, but not limited to, an electromagnetic signal, an optical signal, or any proper combination. The computer-readable signal medium may also be any readable medium except the computer-readable storage medium, and the computer-readable medium may send, propagate, or transmit a program configured to be used by or in combination with an instruction execution system, apparatus, or device The program code in the computer-readable medium may be transmitted with any proper medium, including, but not limited to, radio, a wire, an optical cable, Radio Frequency (RF), etc., or any proper combination thereof.

The flowcharts and block diagrams in the drawings illustrate the architecture, functionality, and operation of systems, methods, and computer program products that may be realized according to various embodiments of the present disclosure. In this regard, each block in the flowchart or block diagram may represent a module, a program segment, or a portion of a code, which includes one or more executable instructions for implementing the specified logic function. It is also to be noted that in some alternative implementations, the functions marked in the blocks may also occur in a different order from those marked in the drawings. For example, two blocks shown in succession may, in fact, be executed substantially in parallel, and sometimes in a reverse order, depending upon the functionality involved. It is also to be noted that each block in the block diagram or flowchart, and a combination of blocks in the block diagram or flowchart may be implemented by a special purpose hardware-based system which performs a specified function or operation, or a combination of special purpose hardware and computer instructions.

The units described in the embodiments of the present disclosure may be implemented by means of software or hardware. The units described may also be provided in a processor, for example, a processor may be described as including a first determination module, a split module and a first transaction module. The names of the units do not constitute a limitation on the unit itself in some cases, for example, the first determination module may also be described as "a module determining the first transaction request".

As another aspect, the present disclosure also provides a computer-readable medium, which may be included in the apparatus described in the above embodiments, or may also be present separately and not fitted into the apparatus. The above computer-readable medium carries one or more programs. One or more above programs are executed by the apparatus to enable the apparatus to include that: a first transaction request is determined, the first transaction request indicates a digital currency to be transacted and first transaction information, and the first transaction information includes a first transaction amount; second transaction information including a second transaction amount is generated according to the first transaction information; the second transaction amount is a difference between an available balance of the digital currency and the first transaction amount; the first transaction information and the second transaction information are respectively signed by using a private key of a first terminal; a first trust chain is generated according to the signed first transaction information and the digital currency, and a second trust chain is generated according to the signed second transaction information and the digital currency; and the first trust chain is sent to a second terminal, so that the second terminal and the first terminal achieve, according to the first trust chain, an offline transaction corresponding to the first transaction amount.

Or, the first transaction request is determined, and the first transaction request indicates the digital currency to be transacted and the first transaction information; the first transaction information is signed by using the private key of the first terminal; the first trust chain is generated according to the signed first transaction information and the digital currency; and the first trust chain is sent to the second terminal, so that the second terminal verifies the first transaction information by using the public key of the first terminal to verify whether the digital currency is credible, and then the first terminal and the second terminal perform the offline transaction according to the first trust chain.

Or, the first trust chain sent by the first terminal is received; the first trust chain indicates the digital currency to be transacted and the transaction time of the digital currency; and a first offline duration of the digital currency is determined according to a first current time and the transaction time, and when the first offline duration is less than a duration threshold, the offline transaction is performed with the first terminal according to the digital currency.

According to the technical solutions of the embodiments of the present disclosure, when determining the first transaction request, the first terminal (payer) generates the second transaction information including the second transaction amount according to the first transaction information indicated by the first transaction request, wherein the second transaction amount is the difference between the available balance of the digital currency indicated by the first transaction request and the first transaction amount, respectively signs the first transaction information indicated by the first indication request and the second transaction information by using the private key of the first terminal, and then respectively generates the first trust chain and the second trust chain according to the signed first transaction information and second transaction information and the digital currency, so that the digital currency is split in the offline transaction, which facilitates the offline transaction. Further, the first terminal sends the first trust chain to the second terminal (payee), so that the second terminal verifies the first transaction information in the first trust chain by using the public key of the first terminal to verify whether the digital currency is credible. When the digital currency is credible, the second terminal performs the offline transaction corresponding to the first transaction amount with the first terminal. Therefore, through the secure and effective verification of the digital currency in the transaction, the second terminal and the first terminal perform the offline transaction according to the first trust chain in the offline situation, so as to ensure the security of the offline transaction.

In addition, when determining the first transaction request, the first terminal (payer) signs the first transaction information indicated by the first transaction request by using the own private key, generates the first trust chain according to the signed first transaction information and the digital currency to be transacted indicated by the first transaction request, and sends the first trust chain to the second terminal (payee), so that the second terminal verifies the first transaction information in the first trust chain by using the public key of the first terminal to verify whether the digital currency is credible. When the digital currency is credible, the second terminal performs the offline transaction with the first terminal. Therefore, through the secure and effective verification of the digital currency in the transaction, the second terminal and the first terminal perform the offline transaction according to the first trust chain in the offline situation, so as to ensure the security of the offline transaction.

In addition, when receiving the first trust chain sent by the first terminal, the second terminal determines the first offline duration of the digital currency according to the first current time and the transaction time of the digital currency to be transacted indicated by the first trust chain. The first offline duration is the duration between the first current time and the last transaction time of the digital currency. Only when the determined first offline duration is less than the duration threshold, the second terminal performs the offline transaction with the first terminal according to the digital currency. Therefore, the security of the offline transaction is ensured by controlling the offline duration of the digital currency in the transaction.

The above specific implementation does not constitute a limitation to the scope of protection of the present disclosure. Those skilled in the art should understand that various modifications, combinations, subcombinations, and substitutions can occur, depending upon design requirements and other factors. Any modifications, equivalent substitutions, improvements, etc. within the spirit and scope of the present disclosure shall be included in the scope of protection of the present disclosure.

## Claims

1. A method for splitting a digital currency in a transaction, applied to a first terminal, comprising:
determining a first transaction request, wherein the first transaction request indicates a digital currency to be transacted and first transaction information, and the first transaction information comprises a first transaction amount;
generating second transaction information comprising a second transaction amount according to the first transaction information, wherein the second transaction amount is a difference between an available balance of the digital currency and the first transaction amount;
respectively signing the first transaction information and the second transaction information by using a private key of the first terminal;
generating a first trust chain according to the signed first transaction information and the digital currency, and generating a second trust chain according to the signed second transaction information and the digital currency; and
sending the first trust chain to a second terminal, so that the second terminal and the first terminal achieve, according to the first trust chain, an offline transaction corresponding to the first transaction amount.

2. The method as claimed in claim 1, further comprising:
sending the second trust chain to a third terminal, so that the third terminal and the first terminal achieve, according to the second trust chain, an offline transaction corresponding to the second transaction amount.

3. The method as claimed in claim 1, wherein the generating the first trust chain according to the signed first transaction information and the digital currency comprises:
signing the first transaction information and a public key of the second terminal by using the private key of the first terminal to generate a first transaction chain; and
generating the first trust chain according to the first transaction chain and the digital currency.

4. The method as claimed in claim 1, wherein the generating the second trust chain according to the signed second transaction information and the digital currency comprises:
signing the second transaction information and a public key of the first terminal by using the private key of the first terminal to generate a second transaction chain; and
generating the second trust chain according to the second transaction chain and the digital currency.

5. A method for splitting a digital currency in a transaction, applied to a second terminal, comprising:
receiving a first trust chain sent by a first terminal, wherein the first trust chain comprises a digital currency to be transacted and first transaction information signed by using a private key of the first terminal, and the first transaction information comprises a first transaction amount;
verifying the first transaction information by using a public key of the first terminal; and
performing, when a verification of the first transaction information is passed, an offline transaction with the first terminal according to the digital currency and the first transaction amount.

6. The method as claimed in claim 5, further comprising:
determining a second transaction request, wherein the second transaction request indicates third transaction information and the digital currency, and the third transaction information comprises a third transaction amount;
signing the third transaction information and a public key of a fourth terminal by using a private key of the second terminal to generate a third transaction chain; and
writing the third transaction chain into the first trust chain, and sending the first trust chain into which the third transaction chain is written to the fourth terminal, so that the fourth terminal achieves, according to the first trust chain into which the third transaction chain is written, an offline transaction corresponding to the third transaction amount.

7. The method as claimed in claim 5, when the verification of the first transaction information is passed and the first trust chain comprises a plurality of pieces of transaction information, further comprising:
exporting the digital currency according to a transaction amount comprised in the last of the plurality of pieces of transaction information.

8. A first terminal for splitting a digital currency in a transaction, comprising a first determination module, a splitting module and a first transaction module, wherein,
the first determination module is configured to determine a first transaction request, wherein
the first transaction request indicates a digital currency to be transacted and first transaction information, and the first transaction information comprises a first transaction amount;
the splitting module is configured to generate second transaction information comprising a second transaction amount according to the first transaction information, wherein the second transaction amount is a difference between an available balance of the digital currency and the first transaction amount; and respectively sign the first transaction information and the second transaction information by using a private key of the first terminal, generate a first trust chain according to the signed first transaction information and the digital currency, and generate a second trust chain according to the signed second transaction information and the digital currency; and
the first transaction module is configured to send the first trust chain to a second terminal, so that the second terminal and the first terminal achieve, according to the first trust chain, an offline transaction corresponding to the first transaction amount.

9. The first terminal as claimed in claim 8, wherein,
the first transaction module is further configured to send the second trust chain to a third terminal, so that the third terminal and the first terminal achieve, according to the second trust chain, an offline transaction corresponding to the second transaction amount.

10. The first terminal as claimed in claim 8, wherein,
the splitting module is configured to sign the first transaction information and a public key of the second terminal by using the private key of the first terminal to generate a first transaction chain; and generate the first trust chain according to the first transaction chain and the digital currency.

11. The first terminal as claimed in claim 8, wherein,
the splitting module is configured to sign the second transaction information and a public key of the first terminal by using the private key of the first terminal to generate a second transaction chain; and generate the second trust chain according to the second transaction chain and the digital currency.

12. A second terminal for splitting a digital currency in a transaction, comprising a receiving module, a verification module and a second transaction module, wherein,
the receiving module is configured to receive a first trust chain sent by a first terminal, wherein the first trust chain comprises a digital currency to be transacted and first transaction information signed by using a private key of the first terminal, and the first transaction information comprises a first transaction amount;
the verification module is configured to verify the first transaction information by using a public key of the first terminal; and
the second transaction module is configured to perform, when a verification of the first transaction information is passed, an offline transaction with the first terminal according to the digital currency and the first transaction amount.

13. The second terminal as claimed in claim 12, wherein,
the receiving module is further configured to receive a second transaction request, wherein the second transaction request indicates third transaction information and the digital currency, and the third transaction information comprises a third transaction amount; and
the second transaction module is further configured to sign the third transaction information and a public key of a fourth terminal by using a private key of the second terminal to generate a third transaction chain; and write the third transaction chain into the first trust chain, and send the first trust chain into which the third transaction chain is written to the fourth terminal, so that the fourth terminal achieves, according to the first trust chain into which the third transaction chain is written, an offline transaction corresponding to the third transaction amount.

14. The second terminal as claimed in claim 12, wherein,
the second transaction module is further configured to export, when the verification of the first transaction information is passed and the first trust chain comprises a plurality of pieces of transaction information, the digital currency according to a transaction amount comprised in the last of the plurality of pieces of transaction information.

15. A system for splitting a digital currency in a transaction, comprising at least two terminals, wherein,
a trust chain is stored in each of the at least two terminals, the trust chain comprises the digital currency and one or more pieces of transaction information, and the transaction information comprises a transaction amount; and a sum of transaction amounts comprised in the last transaction information in each trust chain is equal to a denomination of the digital currency.

16. A method for verifying a digital currency in a transaction, applied to a first terminal, comprising:
determining a first transaction request, wherein the first transaction request indicates a digital currency to be transacted and first transaction information;
signing the first transaction information by using a private key of the first terminal;
generating a first trust chain according to the signed first transaction information and the digital currency; and
sending the first trust chain to a second terminal, so that the second terminal verifies the first transaction information by using a public key of the first terminal to verify whether the digital currency is credible, thereby causing the first terminal and the second terminal to perform an offline transaction according to the first trust chain.

17. The method as claimed in claim 16, wherein the generating the first trust chain according to the signed first transaction information and the digital currency comprises:
signing the first transaction information and a public key of the second terminal by using the private key of the first terminal to generate a first transaction chain; and
generating the first trust chain according to the first transaction chain and the digital currency

18. The method as claimed in claim 16, wherein the generating the first trust chain according to the signed first transaction information and the digital currency comprises:
encrypting the signed first transaction information by using a public key of the second terminal to generate a first transaction chain; and
generating the first trust chain according to the first transaction chain and the digital currency.

19. The method as claimed in claim 16, wherein,
the first transaction information comprises a transaction amount and at least one of a transaction identifier, the number of transactions and a transaction time.

20. A method for verifying a digital currency in a transaction, applied to a second terminal, comprising:
receiving a first trust chain sent by a first terminal, wherein the first trust chain comprises a digital currency to be transacted and first transaction information signed by using a private key of the first terminal;
verifying the first transaction information by using a public key of the first terminal; and
determining, when a verification is passed, that the digital currency is credible, so that the second terminal performs an offline transaction with the first terminal according to the first trust chain.

21. The method as claimed in claim 20, further comprising:
determining a second transaction request, wherein the second transaction request indicates third transaction information, the digital currency and a fourth terminal;
signing the third transaction information and a public key of a fourth terminal by using a private key of the second terminal to generate a third transaction chain; and
writing the third transaction chain into the first trust chain, and sending the first trust chain into which the third transaction chain is written to the fourth terminal, so that the fourth terminal verifies the third transaction chain according to a public key of the second terminal in the first transaction chain.

22. The method as claimed in claim 21, wherein,
the third transaction information and the public key of the fourth terminal are signed by using the private key of the second terminal to generate the third transaction chain.

23. The method as claimed in claim 21, wherein,
the maximum transaction amount corresponding to the first transaction information is greater than the maximum transaction amount corresponding to the third transaction information.

24. The method as claimed in claim 20, when it is determined that the digital currency is credible and the first trust chain comprises a plurality of pieces of transaction information, further comprising:
exporting the digital currency according to a transaction amount comprised in the last of the plurality of pieces of transaction information.

25. A first terminal for verifying a digital currency in a transaction, comprising a first determination module, a first generation module and a first verification module, wherein,
the first determination module is configured to determine a first transaction request, wherein the first transaction request indicates a digital currency to be transacted and first transaction information;
the first generation module is configured to sign the first transaction information by using a private key of the first terminal, and generate a first trust chain according to the signed first transaction information and the digital currency; and
the first verification module is configured to send the first trust chain to a second terminal, so that the second terminal verifies the first transaction information by using a public key of the first terminal to verify whether the digital currency is credible, thereby causing the first terminal and the second terminal to perform an offline transaction according to the first trust chain.

26. The first terminal as claimed in claim 25, wherein,
the first generation module is configured to sign the first transaction and a public key of the second terminal by using the private key of the first terminal to generate a first transaction chain, and generate the first trust chain according to the first transaction chain and the digital currency.

27. The first terminal as claimed in claim 25, wherein,
the first generation module is configured to encrypt the signed first transaction information by using a public key of the second terminal to generate a first transaction chain, and generate the first trust chain according to the first transaction chain and the digital currency.

28. A second terminal for verifying a digital currency in a transaction, comprising a receiving module and a second verification module, wherein,
the receiving module is configured to receive a first trust chain sent by a first terminal, and the first trust chain comprises a digital currency to be transacted and first transaction information signed by using a private key of the first terminal; and
the second verification module is configured to verify the first transaction information by using a public key of the first terminal; and determine, when a verification is passed, that the digital currency is credible, so that the second terminal performs an offline transaction with the first terminal according to the first trust chain.

29. The second terminal as claimed in claim 28, further comprising a second determination module and a second generation module;
the second determination module is configured to determine a second transaction request, wherein the second transaction request indicates third transaction information and the digital currency; and
the second generation module is configured to sign the third transaction information and a public key of a fourth terminal by using a private key of the second terminal to generate a third transaction chain, write the third transaction chain into the first trust chain, and send the first trust chain into which the third transaction chain is written to the fourth terminal.

30. The second terminal as claimed in claim 29, wherein,
the second generation module is configured to sign the third transaction information and the public key of the fourth terminal by using the private key of the second terminal to generate the third transaction chain.

31. The second terminal as claimed in claim 29, wherein when it is determined that the digital currency is credible and the first trust chain comprises a plurality of pieces of transaction information;
the second verification module is further configured to export the digital currency according to a transaction amount comprised in the last of the plurality of pieces of transaction information.

32. A method for managing an offline duration of a digital currency, applied to a second terminal, comprising:
receiving a first trust chain sent by a first terminal, wherein the first trust chain indicates a digital currency to be transacted and a transaction time of the digital currency; and
determining a first offline duration of the digital currency according to a first current time and the transaction time, and when the first offline duration is less than a duration threshold, performing an offline transaction with the first terminal according to the digital currency.

33. The method as claimed in claim 32, further comprising:
when the first offline duration is not less than the duration threshold, rejecting the offline transaction requested by the first terminal, and sending a prompt information for updating the transaction time of the digital currency to the first terminal, so that the first terminal updates the transaction time of the digital currency according to the prompt information.

34. The method as claimed in claim 32, after performing the offline transaction with the first terminal according to the digital currency, further comprising:
updating the transaction time of the digital currency according to a time of the offline transaction.

35. The method as claimed in claim 32, when establishing a communication connection with a currency management apparatus, further comprising:
sending the digital currency to the currency management apparatus, so that the currency management apparatus updates the transaction time of the digital currency according to a second current time; and receiving the digital currency returned by the currency management apparatus.

36. A method for managing an offline duration of a digital currency, applied to a currency management apparatus, comprising:
receiving a transaction request sent by a second terminal, wherein the transaction request indicates a digital currency to be transacted, and an attribute of the digital currency comprises a transaction time; and
determining a second offline duration of the digital currency according to a second current time and the transaction time, and performing, when the second offline duration is less than a duration threshold, a transaction according to the digital currency.

37. The method as claimed in claim 36, further comprising:
updating the transaction time of the digital currency according to the second current time.

38. The method as claimed in claim 36, wherein the performing the transaction according to the digital currency comprises:
achieving a payment process requested by the second terminal according to the digital currency; or
redeeming the digital currency for the second terminal.

39. The method as claimed in claim 36, further comprising:
receiving a digital currency generation request sent by a fifth terminal, wherein the digital currency generation request indicates a denomination of a requested digital currency and user information corresponding to the fifth terminal;
generating a digital currency corresponding to the user information and the denomination, and writing a generation time of the digital currency into the digital currency; and
notifying the fifth terminal of the digital currency.

40. A second terminal for managing an offline duration of a digital currency, comprising a first receiving module and a first transaction module, wherein,
the first receiving module is configured to receive a first trust chain sent by a first terminal, wherein the first trust chain indicates a digital currency to be transacted and a transaction time of the digital currency; and
the first transaction module is configured to determine a first offline duration of the digital currency according to a first current time and the transaction time, and perform, when the first offline duration is less than a duration threshold, an offline transaction with the first terminal according to the digital currency.

41. The second terminal as claimed in claim 40, wherein,
the first transaction module is further configured to reject, when the first offline duration is not less than the duration threshold, an offline transaction requested by the first terminal, and send a prompt information for updating the transaction time of the digital currency to the first terminal, so that the first terminal updates the transaction time of the digital currency according to the prompt information.

42. The second terminal as claimed in claim 40, wherein,
the first transaction module is further configured to send the digital currency to a currency management apparatus when establishing a communication connection with the currency management apparatus, so that the currency management apparatus updates the transaction time of the digital currency according to a second current time; and receive the digital currency returned by the currency management apparatus.

43. A currency management apparatus for managing an offline duration of a digital currency, comprising a second receiving module and a second transaction module, wherein,
the second receiving module is configured to receive a transaction request sent by a second terminal, wherein the transaction request indicates a digital currency to be transacted, and an attribute of the digital currency comprises a transaction time; and
the second transaction module is configured to determine a second offline duration of the digital currency according to a second current time and the transaction time, and perform, when the second offline duration is less than a duration threshold, a transaction according to the digital currency.

44. The currency management apparatus as claimed in claim 43, wherein,
the second transaction module is further configured to update the transaction time of the digital currency according to the second current time.

45. The currency management apparatus as claimed in claim 43, wherein,
the second transaction module is configured to achieve a payment process requested by the second terminal according to the digital currency; or, redeem the digital currency for the second terminal.

46. The currency management apparatus as claimed in claim 43, further comprising a currency generation module, wherein,
the currency generation module is configured to receive a digital currency generation request sent by a fifth terminal, wherein the digital currency generation request indicates a denomination of a requested digital currency and user information corresponding to the fifth terminal; generate a digital currency corresponding to the user information and the denomination, and write a generation time of the digital currency into the digital currency; and notify the fifth terminal of the digital currency.

47. An electronic apparatus, comprising:
one or more processors; and
a storage apparatus, configured to store one or more programs;
the one or more programs are executed by the one or more processors to cause the one or more processors to implement the method as claimed in any one of claims 1 to 7, 16 to 24 and 32 to 39.

48. A computer-readable medium, on which a computer program is stored, wherein the computer program is executed by a processor to implement the method as claimed in any one of claims 1 to 7, 16 to 24 and 32 to 39.
